# EUROPEAN PATENT SPECIFICATION

(11) **EP 3 567 976 B1**
(45) Date of publication and mention of the grant of the patent: **12.04.2023**
(21) Application number: 18735876.7
(22) Date of filing: 08.01.2018
(51) Int. Cl.: H04W 76/12, H04W 36/00, H04W 36/14, H04W 40/36

(54) **METHOD FOR INFORMATION EXCHANGE AMONG SYSTEMS, USER-PLANE CORE NETWORK DEVICE, WIRELESS COMMUNICATION SYSTEM AND COMPUTER-READABLE STORAGE MEDIUM**
VERFAHREN ZUM INFORMATIONSAUSTAUSCH ZWISCHEN SYSTEMEN, KERNNETZWERKVORRICHTUNG AUF BENUTZEREBENE, DRAHTLOSKOMMUNIKATIONSSYSTEM UND COMPUTERLESBARES SPEICHERMEDIUM
PROCÉDÉ D'ÉCHANGE D'INFORMATIONS ENTRE DES SYSTÈMES, DISPOSITIF DE RÉSEAU CENTRAL DE PLAN UTILISATEUR, SYSTÈME DE COMMUNICATION SANS FIL ET SUPPORT DE STOCKAGE LISIBLE PAR ORDINATEUR

(30) Priority: 06.01.2017 CN 201710008627; 07.01.2017 CN 201710015171
(43) Date of publication of application: 13.11.2019
(73) Proprietor: Huawei Technologies Co., Ltd., Longgang District Shenzhen, Guangdong 518129 (CN)
(72) Inventor: HAN, Lifeng, Shenzhen Guangdong 518129 (CN)
(74) Representative: Epping - Hermann - Fischer
(86) International application number: PCT/CN2018/071787
(87) International publication number: WO 2018/127182

(56) References cited:
- WO-A1-2015/160329
- CN-A- 101 473 679
- CN-A- 102 202 367
- CN-A- 103 152 782
- US-A1- 2012 207 129
- NOKIA ET AL: "Resolving editor's notes in Solution 18.2", 3GPP DRAFT; S2-167077, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Reno, NV 17 November 2016 (2016-11-17), XP051185457, Retrieved from the Internet: URL:http://www.3gpp.org/ftp/Meetings_3GPP_ SYNC/SA2/Docs/ [retrieved on 2016-11-17]
- SAMSUNG: "Update of solution 18.4 to support QoS mapping on Common IP Anchor", 3GPP DRAFT; S2-166455_UPDATE OF SOLUTION 18.4 TO SUPPORT QOS MAPPING ON COMMON IP ANCHOR, 3RD GENERATION PARTNERSHIP PROJECT (3GPP), MOBILE COMPETENCE CENTRE ; 650, ROUTE DES LUCIOLES ; F-06921 SOPHIA , vol. SA WG2, no. Reno, Nevada (US); 20161114 - 20161118 14 November 2016 (2016-11-14), XP051185017, Retrieved from the Internet: URL:http://www.3gpp.org/ftp/Meetings_3GPP_ SYNC/SA2/Docs/ [retrieved on 2016-11-14]
- NOKIA ET AL: "Updates on interworking and migration solution 18.2: Call flows", 3GPP DRAFT; S2-166101, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Kaohsiung, Taiwan; 20161017 - 20161021 24 October 2016 (2016-10-24), XP051170061, Retrieved from the Internet: URL:http://www.3gpp.org/ftp/tsg_sa/WG2_Arc h/TSGS2_117_Kaohsiung_City/Docs/ [retrieved on 2016-10-24]
- NOKIA ET AL.: 'S 2-167077 , Resolving Editor's Notes in Solution' 3GPPTSG SAWG2 MEETING #118 vol. 18, no. 2, 18 November 2016, XP051185457
- ERICSSON: "QoS: Clarifications and updates of solution 2.1", 3GPP DRAFT; S2-166392_QOS_UPDATE_SOL_2_1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Reno, Nevada, USA; 20161114 - 20161118 14 November 2016 (2016-11-14), XP051184951, Retrieved from the Internet: URL:http://www.3gpp.org/ftp/Meetings_3GPP_ SYNC/SA2/Docs/ [retrieved on 2016-11-14]

## Description

### TECHNICAL FIELD

Embodiments of the present application relate to the field of wireless communications, and in particular, to an inter-system information exchange method, a user-plane core network device, a wireless communications system, and a computer-readable storage medium.

### BACKGROUND

In a wireless communications system, a link from a core network device, to a wireless access device (for example, a wireless access device), and to user equipment (user equipment, UE) is a downlink, and a link from the user equipment, to the wireless access device, and to the core network device is an uplink.

In a current wireless communications system, for example, a Long Term Evolution (long term evolution, LTE) system, in the uplink and the downlink, the core network device, the wireless access device, and the user equipment establish a non-access stratum service bearer on a non-access stratum (non-access stratum, NAS) and establish an access stratum service bearer on an access (access, AS) stratum, to transmit a service data flow of the user equipment and ensure quality of service (quality of service, QoS) of the service data flow.

As the user equipment moves between wireless communications systems of different communications technologies, the service data flow needs to be transmitted in a wireless communications system to which the user equipment moves. For example, the service data flow of the user equipment is handed over from a fifth generation wireless communications system to a wireless communications system of another communications technology (for example, LTE), or the user equipment is handed over from a wireless communications system of another communications technology to the fifth generation wireless communications system. Manners of establishing non-access stratum service bearers are different when the service data flow of the user equipment is transmitted in wireless communications systems of different communications technologies. Consequently, continuity of the service data flow of the user equipment cannot be ensured in a service transfer process, thereby lowering experience of the user equipment. Document WO 2015/160329 A1 dislcoses systems, methods, apparatuses, and computer program products for interworking between bearer-less networks and bearer-based networks. GRE (generic routing encapsulation) or MIP (mobile IP) tunnel is established between 5GAP, M-GW/AR and M-GW/ER for routing the user plane. A network entity in a bearer-less network initates handover of a user equipment from the bear-less network to a bearer-based network and maps QoS parameters from different service flows of the the bear-less network to EPS bearer level QoS of the bearer-based network.

3GPP document S2-166392, "QoS: Clarifications and updates of solution 2.1" from Ericsson, SA WG2 Meeting #118, Nov 14 - 18, 2016, Reno, Nevada, USA, refers to mapping PDU sessions in order to forward packets to a service bearer network.

### SUMMARY

Embodiments of the present application provide an inter-system information exchange method, a user-plane core network device, a wireless communications system, and a computer-readable storage medium, so as to avoid a problem that a service data flow of the user equipment is not continuous and user experience is lowered because the user equipment moves between wireless communications systems of different communications technologies. The invention is set out in the appended set of claims.

### BRIEF DESCRIPTION OF DRAWINGS

FIG 1-A is a schematic diagram of a system architecture of a wireless communications system according to an embodiment of the present application;
FIG 1-B is a protocol architectural diagram of a wireless communications system according to an embodiment of the present application;
FIG 2-A is a schematic diagram of an inter-system information exchange procedure as an example which is not according to the invention and is present for illustartion purposes only;
FIG 2-B is a schematic diagram of an inter-system information exchange procedure as an example which is not according to the invention and is present for illustartion purposes only;
FIG 2-C is a schematic diagram of an inter-system information exchange procedureas an example which is not according to the invention and is present for illustartion purposes only;
FIG 3 is a schematic diagram of inter-system information exchanging according to an embodiment of the present application;
FIG 4 is a schematic diagram of inter-system information exchanging according to an embodiment of the present application;
FIG 5 is a schematic diagram of inter-system information exchanging according to an embodiment of the present application;
FIG 6 is a schematic diagram of inter-system information exchanging according to an embodiment of the present application;
FIG 7 is a schematic diagram of inter-system information exchanging according to an embodiment of the present application;
FIG 8 is a schematic diagram of inter-system information exchanging as an example which is not according to the invention and is present for illustartion purposes only;
FIG 9 is a schematic diagram of inter-system information exchanging as an example which is not according to the invention and is present for illustartion purposes only;
FIG 10 is a schematic diagram of inter-system information exchanging as an example which is not according to the invention and is present for illustartion purposes only;
FIG 11 is a schematic diagram of an architecture of a first wireless communications system according to an embodiment of the present application;
FIG 12 is a schematic diagram of an architecture of a second wireless communications system according to an embodiment of the present application;
FIG 13 is a schematic structural diagram of a wireless access device according to an embodiment of the present application;
FIG 14 is a schematic structural diagram of a core network device according to an embodiment of the present application; and
FIG 15 is a schematic structural diagram of user equipment according to an embodiment of the present application.

### DESCRIPTION OF EMBODIMENTS

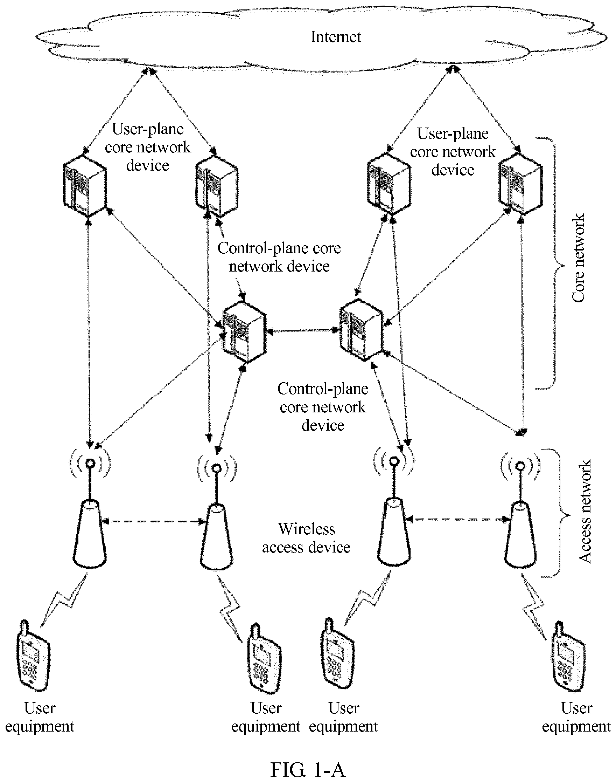

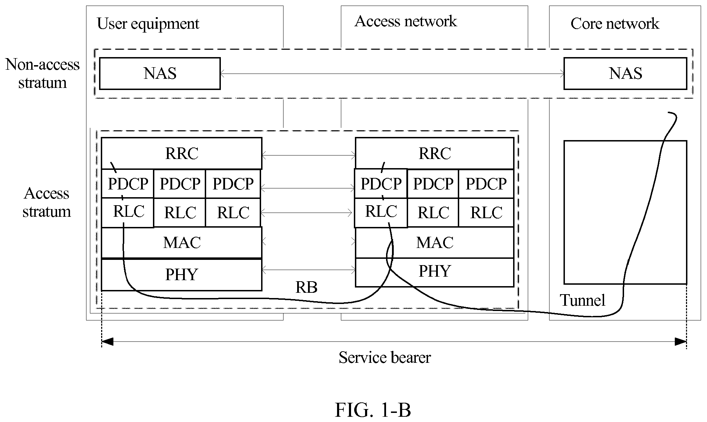

FIG 1-A is a schematic diagram of a system architecture of a wireless communications system according to an embodiment of the present application. As shown in FIG 1, the wireless communications system includes a core network, an access network, and user equipment (also referred to as a terminal). The core network includes a user-plane core network device and a control-plane core network device. The access network mainly includes wireless access devices, for example, various transmission reception points (transmission reception point, TRP) such as a base station or a wireless local area network access point, and provides an access service in a licensed spectrum or an access service in an unlicensed spectrum for the user equipment. The user equipment accesses the wireless communications system by using the access network and the core network, and then accesses the Internet by using the core network and a public data network (public data network, PDN) server connected to the core network, so as to obtain various services such as multimedia audio and videos and movie downloading.

In wireless communications systems shown in FIG 1-A, the wireless communications systems of different communications technologies are connected to each other by using the core network. The user equipment and the wireless access device serving the user equipment transmit various types of data, such as control signaling or service data, on an uplink and a downlink according to protocol layers specified in the 3rd Generation Partnership Project (the 3rd generation partnership project, 3GPP). Most control signaling is mainly transmitted on a control channel of each protocol layer, and most service data is mainly transmitted on a traffic channel of each protocol layer. Data transmitted at any layer is finally carried on a physical layer and is transmitted in wireless space by using at least one physical antenna.

The access network enables the user equipment by using some of the protocol layers to access the wireless communications system, and the some protocol layers are collectively referred to as an access (access, AS) stratum. Simply, the access stratum is a protocol layer used to enable the user equipment to connect to an air interface between the user equipment and the access network in the wireless communications system. However, for some types of signaling data or service data, the access network does not perform any processing when they are transmitted to the access network, and the access network only forwards these signaling data or service data. Because these data does not relate to processing that the access network enables the user equipment to access the wireless communications system, a protocol layer that carries these data is a non-access (non-access, NAS) stratum.

Protocol layers of an LTE wireless communications system include a physical (PHY) layer, a media access control (media access control, MAC) layer, a Radio Link Control (Radio Link Control, RLC) layer, a Packet Data Convergence Protocol (Packet Data Convergence Protocol, PDCP) layer, a radio resource control (radio resource control, RRC) layer, and the like. These protocol layers relate to access processing performed by an evolved wireless access device on the user equipment, and therefore these protocol layers are access strata.

When a service data flow is being transmitted, a service bearer may be configured in the wireless communications system to transmit the service data flow of the user equipment. One service bearer includes a transmission resource on a path between the access network and the user equipment and a transmission resource on a path between the access network and the core network. On the access stratum, the service data flow is carried on an access stratum service bearer, and on the non-access stratum, the service data flow is carried on a non-access stratum service bearer. The non-access stratum service bearer may be transparent to the wireless access device in the wireless communications system, that is, the wireless access device knows that there is service data flow transmission, but does not know content of service data flow transmission. The service data flow refers to data flows of various application services served by a communications network, for example, a data flow of a video service. One service bearer separately provides quality of service (QoS) for the data on the path between the access network and the user equipment, and the path between the access network and the core network. The wireless communications system configures transmission resources for the data on the path between the user equipment and the access network, specifically at each protocol layer (for example, a PDCP layer, an RLC layer, a MAC layer, and a physical layer) on the path, and a sum of these transmission resources is referred to as a radio bearer (radio bearer, RB). The path between the user equipment and the access network is referred to as a radio bearer that provides quality of service for service data transmitted on the path between the user equipment and the access network. The path between the access network and the core network provides, by establishing a bearer with a dedicated tunnel, quality of service for the service data transmitted between the access network and the core network.

It should be noted that the quality of service is expressed by a group of quality of service parameters, and this group of quality of service parameters determines whether the quality of service is good or poor. The group of quality of service parameters may include at least one of the following parameters: a quality of service class identifier (QoS Class Identifier, QCI), a guaranteed bit rate (Guaranteed Bit Rate, GBR), a maximum bit rate (Maximum Bit Rate, MBR), an aggregate maximum bit rate (Aggregate Maximum Bit Rate, AMBR), and the like. The QCI indicates one or more of indicators such as a latency, a packet loss rate, and a priority. When the service data flow of the user equipment is transferred from a wireless communications system of one communications technology to a wireless communications system of another communications technology, for example, handed over from a fifth generation wireless communications system to an LTE system or from the LTE system to the fifth generation wireless communications system, data packet transmission is discontinuous in a handover process because the wireless communications systems of the two communications technologies may have different bear manners for the service data flow of the user equipment. For example, in the fifth generation wireless communications system, one service bearer on a non-access stratum is referred to as one service flow and is also referred to as a QoS flow (QoS flow), and a plurality of service flows are mapped to one service bearer on an access stratum. The non-access stratum adds service data flows of different quality of service requirements to service flows that provide different quality of service on the non-access stratum, and then the access stratum maps the service flows that provide different quality of service to at least one service bearer on an access stratum on an entire path between the user equipment and the core network. It is assumed that in the fifth generation wireless communications system, one service data flow of the user equipment is filtered by a traffic flow template, and a plurality of service flows that carry the service data flow are obtained. One service flow group formed by the plurality of service flows may be referred to as one service bearer group on the NAS stratum. For example, the user equipment has two service data flows, the non-access stratum adds a service data flow 1 to a service flow 1 (the service flow 1 may be in a service flow group 1), and adds a service data flow 2 to a service flow 2 (the service flow 2 may be in a service flow group 2). The access stratum further adds the service flow 1 to a service bearer 1 on the access stratum, and adds the service flow 2 to a service bearer 2 on the access stratum. As a handover of the user equipment occurs, a wireless communications system to which the user equipment is handed over may add the service data flow 1 to the service bearer 2 on the access stratum. As a result, mappings of the service data flow on the non-access stratum and the access stratum in the source system before the handover are different from mappings of the service data flow on the non-access stratum and the access stratum in the target system after the handover, thereby decreasing continuity of the user equipment.

As shown in FIG 1-B, for an LTE system, a NAS stratum service bearer is corresponding to an evolved packet system bearer (EPS bearer), and an AS stratum service bearer corresponding to the NAS stratum service bearer includes an air interface radio bearer (radio bearer, RB) and a ground side tunnel. The ground side tunnel is established per a service bearer, and includes an S1 bearer and an S5 bearer, which are respectively located between a wireless access device and an SGW (serving Gateway, serving gateway) and between the SGW and a PGW (PDN gateway, PDN gateway). For details, refer to specifications in a 3GPP protocol.

For a fifth generation communications system, one NAS stratum service bearer is corresponding to one service flow. One AS stratum service bearer is corresponding to an air interface radio bearer RB and a ground side tunnel. The tunnel is established per a protocol/packet data unit session (PDU session). That is, service flows belonging to a same PDU session use a same tunnel. The PDU session is a link between user equipment and a data network (for example, the Internet) providing service content, to provide a protocol data unit link service. Each PDU session has a unique identifier, and the unique identifier of the PDU session may be one of the following: a PDU session identifier, an access point name (access point name, APN), an identifier of a user-plane core network device, an address (for example, an IP address) of the user-plane core network device, and an IP address assigned by the user-plane core network device to the user equipment.

Further, if the air interface radio bearer is used to carry service data, the radio bearer is also referred to as a data radio bearer (data radio bearer, DRB).

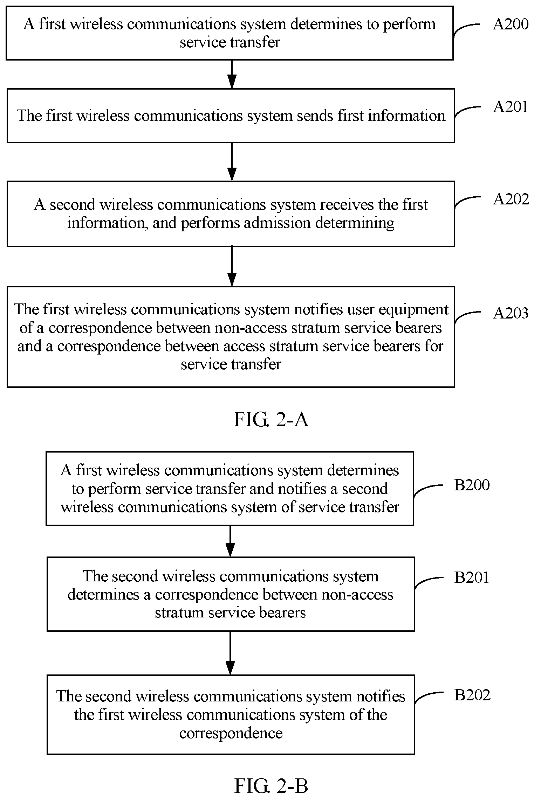

As shown in a flowchart of an inter-system information exchange method in FIG 2-A, the inter-system information exchange method is provided as an example which is not according to the invention and is present for illustartion purposes only. A first wireless communications system is different from the second wireless communications system. User equipment is in a signal coverage area of the first wireless communications system and the second wireless communications system and is served by the first wireless communications system.

A200. The first wireless communications system determines to transfer a service data flow of the user equipment to the second wireless communications system, where the first wireless communications system and the second wireless communications system use different communications technologies.

In A200, the user equipment measures a signal sent by the second wireless communications system, to generate a measurement report. Optionally, the measurement report includes a measurement result of signal strength and signal quality that are of the signal sent by the second wireless communications system. The first wireless communications system may determine, according to the measurement report, that the second wireless communications system meets a service transfer condition, for example, the signal strength or the signal quality in the measurement report is greater than a threshold, and the first wireless communications system determines that the service data flow of the user equipment can be transferred to the second wireless communications system.

A201. The first wireless communications system sends first information to the second wireless communications system, where the first information indicates one service bearer that is on a non-access stratum in the second wireless communications system and that is corresponding to one service bearer group of the service data flow of the user equipment on a non-access stratum in the first wireless communications system, and the one service bearer group includes at least two service bearers on the non-access stratum in the first wireless communications system.

In A201, the first wireless communications system determines a correspondence between one service bearer group on the non-access stratum in the first wireless communications system and one service bearer on the non-access stratum in the second wireless communications system, and uses the first information to indicate a service bearer that is on the non-access stratum in the second wireless communications system and that is corresponding to a service bearer group of the service data flow on the non-access stratum in the first wireless communications system. When the first wireless communications system is a fifth generation wireless communications system, one service bearer on the non-access stratum in the first wireless communications system is one service flow, a plurality of service flows are one service bearer group, and one service bearer group is corresponding to one service bearer on an access stratum in the first wireless communications system. When the second wireless communications system is an LTE system, one service bearer on the non-access stratum in the second wireless communications system is one evolved packet system bearer (EPS bearer), and one service bearer on the non-access stratum is corresponding to one service bearer on an access stratum in the second wireless communications system.

To determine the correspondence between one service bearer group on the non-access stratum in the first wireless communications system and one service bearer on the non-access stratum in the second wireless communications system, optionally, a core network device in the first wireless communications system receives second information sent by a wireless access device in the first wireless communications system, where the second information identifies at least one service bearer group of the service data flow on the non-access stratum in the first wireless communications system; and determines, based on the second information, a traffic flow template (optional), and a traffic flow template priority (optional), the one service bearer that is on the non-access stratum in the second wireless communications system and that is corresponding to the one service bearer group of the service data flow on the non-access stratum in the first wireless communications system.

A202. A core network device in the second wireless communications system receives the first information, and determines whether to admit the correspondence determined by the first wireless communications system. If admitted, the core network device in the second wireless communications system sends an admission notification, indicating that the one service bearer that is on the non-access stratum in the second wireless communications system and that is corresponding to the service data flow is admitted.

A203. A core network device in the first wireless communications system notifies the user equipment of the one service bearer that is on the non-access stratum in the second wireless communications system and that is corresponding to the one service bearer group of the service data flow on the non-access stratum in the first wireless communications system, so that the user equipment performs service transfer on the non-access stratum.

Further, a core network in the first wireless communications system may further notify the user equipment of one service bearer that is on the access stratum in the second wireless communications system and that is corresponding to the service data flow, so that the user equipment performs service transfer on the access stratum.

According to the technical solution provided in this example, a source system (the first wireless communications system) of service transfer determines a correspondence between service bearers on the non-access stratum, so as to avoid a problem of service continuity interruption caused by random service bearer allocation when the user equipment transmits the service data flow in the second wireless communications system.

As shown in a flowchart of an inter-system information exchange method in FIG 2-B, the inter-system information exchange method is provided as an example which is not according to the invention and is present for illustartion purposes only. A first wireless communications system is different from the second wireless communications system. User equipment is in a signal coverage area of the first wireless communications system and the second wireless communications system and is served by the first wireless communications system. In this example, the first wireless communications system may be a fifth generation wireless communications system, and the second wireless communications system may be an LTE system.

B200. The second wireless communications system determines that a service data flow of the user equipment is to be transferred from the first wireless communications system to the second wireless communications system.

Specifically, the user equipment measures a signal sent by the second wireless communications system, to generate a measurement report. Optionally, the measurement report includes a measurement result of signal strength and signal quality that are of the signal sent by the second wireless communications system. The first wireless communications system may determine, according to the measurement report, that the second wireless communications system meets a service transfer condition, for example, the signal strength or the signal quality in the measurement report is greater than a threshold, and the first wireless communications system determines that the service data flow of the user equipment can be transferred to the second wireless communications system. The first wireless communications system sends a service transfer request to the second wireless communications system, so that the second wireless communications system determines that the service data flow of the user equipment is to be transferred from the first wireless communications system to the second wireless communications system.

B201. The second wireless communications system determines one service bearer that is on a non-access stratum in the second wireless communications system and that is corresponding to one service bearer group of the service data flow on a non-access stratum in the first wireless communications system, where the service bearer group includes at least two service bearers on the non-access stratum in the first wireless communications system.

In B201, the second wireless communications system determines the service bearer that is on the non-access stratum in the second wireless communications system and that is corresponding to the service bearer group on the non-access stratum in the first wireless communications system. For example, a core network device in the second wireless communications system receives third information from the first wireless communications system. The third information indicates at least one service bearer group of the service data flow on the non-access stratum in the first wireless communications system, and at least one of a traffic flow template and a traffic flow template priority. Each of the at least one service bearer group is corresponding to one service bearer on an access stratum in the first wireless communications system, and the at least one service bearer group includes the one service bearer group. The core network device in the second wireless communications system determines, according to the third information, the one service bearer that is on the non-access stratum in the second wireless communications system and that is corresponding to the one service bearer group of the service data flow on the non-access stratum in the first wireless communications system.

B202. The second wireless communications system notifies the first wireless communications system of the one service bearer.

The second wireless communications system notifies the first wireless communications system of the determined service bearer.

Further, the core network device in the second wireless communications system notifies a wireless access device in the first wireless communications system of the service bearer that is on the non-access stratum in the second wireless communications system and that is corresponding to the service data flow.

Further, the core network device in the second wireless communications system notifies the user equipment of the one service bearer that is on the non-access stratum in the second wireless communications system and that is corresponding to the service data flow, and the core network device in the second wireless communications system notifies the user equipment of one service bearer that is on an access stratum in the second wireless communications system and that is of the service data flow.

According to the technical solution provided in this example, a target system (the second wireless communications system) of service transfer determines a correspondence between service bearers on the non-access stratum, so as to avoid a problem of service continuity interruption caused by random service bearer allocation when the user equipment transmits the service data flow in the second wireless communications system.

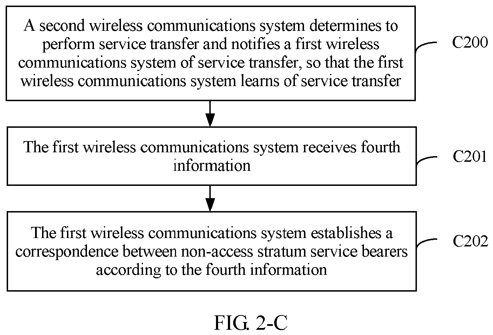

As shown in a flowchart of an inter-system information exchange method in FIG 2-C, the inter-system information exchange method is provided as an example which is not according to the invention and is present for illustartion purposes only. A first wireless communications system is different from the second wireless communications system. User equipment is in a signal coverage area of the first wireless communications system and the second wireless communications system and is served by the second wireless communications system. In this example, the first wireless communications system may be a fifth generation wireless communications system, and the second wireless communications system may be an LTE system.

C200. The first wireless communications system determines that a service data flow of the user equipment is to be transferred from the second wireless communications system to the first wireless communications system.

Specifically, the user equipment measures a signal sent by the first wireless communications system, to generate a measurement report. Optionally, the measurement report includes a measurement result of signal strength and signal quality that are of the signal sent by the first wireless communications system. The second wireless communications system may determine, according to the measurement report, that the first wireless communications system meets a service transfer condition, for example, the signal strength or the signal quality in the measurement report is greater than a threshold, and the second wireless communications system determines that the service data flow of the user equipment can be transferred to the first wireless communications system. The second wireless communications system sends a service transfer request to the first wireless communications system, so that the first wireless communications system determines that the service data flow of the user equipment is to be transferred from the second wireless communications system to the first wireless communications system.

C201. The first wireless communications system receives fourth information from the second wireless communications system, where the fourth information indicates one service bearer that is on a non-access stratum in the second wireless communications system and that is of the service data flow.

C202. The first wireless communications system determines, according to the fourth information, one service bearer group that is on a non-access stratum in the first wireless communications system and that is corresponding to the service bearer, where the service bearer group includes at least two service bearers on the non-access stratum in the first wireless communications system. In C202, a core network device in the first wireless communications system splits, according to the fourth information, a traffic flow template, and a traffic flow template priority, the service bearer to determine the service bearer group that is on the non-access stratum in the first wireless communications system and that is corresponding to the service bearer.

Optionally, the core network device in the first wireless communications system notifies a wireless access device in the second wireless communications system of the service bearer group that is on the non-access stratum in the first wireless communications system and that is corresponding to the service data flow.

Optionally, the core network device in the first wireless communications system notifies, by using the second wireless communications system, the user equipment of the service bearer group that is on the non-access stratum in the first wireless communications system and that is corresponding to the service data flow.

Optionally, a wireless access device in the first wireless communications system corresponds the service bearer group to one service bearer on an access stratum in the first wireless communications system.

Optionally, the wireless access device in the first wireless communications system notifies, by using the second wireless communications system, the user equipment of the correspondence between the service bearer of the service data flow on the access stratum in the first wireless communications system and the service bearer group on the non-access stratum in the first wireless communications system.

According to the technical solution provided in this example, as a target system of service transfer, the first wireless communications system determines a correspondence between service bearers on the access stratum, so as to avoid a problem that service continuity may be interrupted when a service is transferred to the first wireless communications system.

It should be noted that, in various embodiments of the present application, one service data flow of the user equipment is used as an example. In actual, the user equipment may have a plurality of service data flows. A method for enabling one service bearer group of each service data flow on the NAS stratum in the first wireless communications system to correspond to one service bearer on the NAS stratum in the second wireless communications system is similar to a manner of enabling one service bearer on the NAS stratum in the second wireless communications system to correspond to one service bearer group on the NAS stratum on the first wireless communications system.

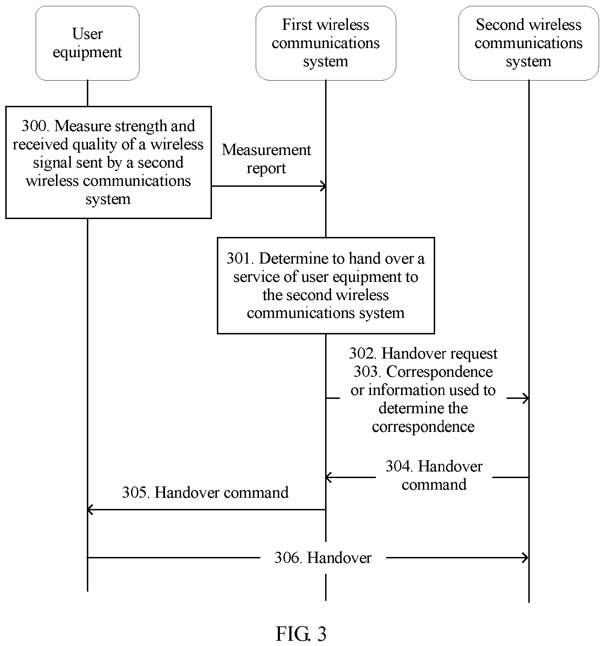

As shown in a schematic diagram of an inter-system information exchange method in FIG 3, one aspect of an embodiment of the present application provides the inter-system information exchange method. This embodiment of the present application provides further a refinement of the foregoing embodiment, and same or similar content may not be described again.

300. Optionally, the user equipment measures signal strength and received signal quality of a wireless signal sent by the second wireless communications system, and notifies the first wireless communications system of a measurement report.

Specifically, the user equipment measures signal strength and signal received quality of a wireless signal sent by a second wireless access device in the second wireless communications system, and sends a measurement report to a first wireless access device in the first wireless communications system. For example, in an LTE system, the signal strength is reference signal received power (reference signal received power, RSRP), and the signal received quality is reference signal received quality (reference signal received quality, RSRQ). A sending time of the measurement report may be configured by the first wireless access device that is in the first wireless communications system and that serves the user equipment, and may be periodic or non-periodic.

301. Optionally, the first wireless communications system determines, according to the measurement report, to transfer a service (in this embodiment, a handover is used as an example) of the user equipment to the second wireless communications system.

Optionally, for a transfer condition, refer to specifications in a 3GPP protocol. For example, if any one of the signal strength of the wireless signal and the wireless signal received quality of the wireless signal of the second wireless access device that are indicated in the measurement report is greater than or equal to a preset threshold, the first wireless access device determines that the service of the user equipment can be handed over to the second wireless communications system.

302. The first wireless communications system sends a handover request to the second wireless communications system, where the handover request is used to hand over a service data flow of the user equipment from the first wireless communications system to the second wireless communications system.

303. The first wireless communications system notifies the second wireless communications system of a correspondence between a service bearer group and a service bearer on a non-access stratum in the foregoing embodiment, or of related information used by the second wireless communications system to determine the correspondence. The information notified in 303 may be included in a same message as the handover request in 302 and sent to the second wireless communications system, or may be sent after the handover request is sent.

For example, the related information in 303 may be a quality of service rule of a service bearer provided by the first wireless communications system for the service data flow of the user equipment, for example, include an identifier of the service bearer of the service data flow of the user equipment. In this case, the first wireless communications system directly sends the quality of service rule of the service bearer that is in the first wireless communications system and that is of the service data flow of the user equipment to the second wireless communications system, so that the second wireless communications system configures a service bearer that is on a non-access stratum in the second wireless communications system and that is corresponding to a service bearer of the service data flow of the user equipment on a non-access stratum in the first wireless communications system. Optionally, if the service bearer on the non-access stratum in the first wireless communications system is one service bearer group including at least two services on the non-access stratum, the corresponding service bearer on the non-access stratum in the second wireless communications system includes one service. If there is one service bearer on the non-access stratum in the first wireless communications system, the corresponding service bearer on the non-access stratum in the second wireless communications system is one service bearer including at least two services. Optionally, when the first wireless communications system is a fifth generation wireless communications system, the service bearer on the non-access stratum in the first wireless communications system may be a service flow group of the service data flow in the fifth generation wireless communications system. When the second wireless communications system is an LTE system, the service bearer on the non-access stratum in the LTE system is an EPS bearer in the LTE system.

For another example, the correspondence is sent in 303, that is, one service bearer group of the service data flow of the user equipment on the non-access stratum in the first wireless communications system is corresponding to one service bearer on the non-access stratum in the second wireless communications system. In this case, the first wireless communications system configures one service bearer that is on the non-access stratum in the second wireless communications system and that is corresponding to one service bearer group of the service data flow of the user equipment on the non-access stratum in the first wireless communications system, and notifies the second wireless communications system of the configuration. The second wireless communications system may determine whether to admit the configuration of the first wireless communications system. If admitted, the second wireless communications system performs a service handover according to the configuration of the first wireless communications system. If not admitted, the second wireless communications system notifies the first wireless communications system that the second wireless communications system does not admit the configuration of the first wireless communications system, and optionally, the second wireless communications system may adjust the configuration of the first wireless communications system, and notify the first wireless communications system of an adjusted result. If the first wireless communications system configures a plurality of service bearer groups of the service of the user equipment on the non-access stratum in the second wireless communications system, the second wireless communications system may notify the first wireless communications system that of the plurality of service bearer groups configured by the first wireless communications system, which service bearer group is admitted and which service bearer group is not admitted. Optionally, first information or third information further includes a PDU session identifier of the service data flow of the user equipment.

It should be noted that the service data flow of the user equipment may include a plurality of service packets. Service packets that have a same or similar quality of service requirement in the plurality of service packets are carried on non-access stratum service bearers that provide same quality of service. If there are at least two non-access stratum service bearers for this service data flow, these service bearers form one service bearer group. Service packets that have different quality of service requirements in the plurality of service packets are carried on non-access stratum service bearers of different quality of service.

304. The second wireless communications system sends a handover response to the first wireless communications system.

305. If the handover response allows the service of the user equipment to be handed over to the second wireless communications system, the first wireless communications system sends a handover command to the user equipment, where the handover command instructs the user equipment to perform a handover from the first wireless communications system to the second wireless communications system.

306. The second wireless communications system notifies the first wireless communications system that a service bearer that is of the service data flow of the user equipment in the second wireless communications system and that is configured by the first wireless communications system is allowed or not allowed; or notifies the first wireless communications system of a service bearer that is configured by the second wireless communications system according to the first information and that is corresponding to the service data flow of the user equipment on a non-access stratum in the second wireless communications system.

It should be noted that sending of the first information in 306 is an optional action, and the second information may be included in a same message as the handover response in 304 and sent to the first wireless communications system, or may be sent after the handover response is sent. 307. The user equipment is handed over to the second wireless communications system according to the handover command.

According to the technical solution provided in this embodiment of the present application, the first wireless communications system notifies the second wireless communications system of information about a service bearer that is corresponding to the service data flow of the user equipment on the non-access stratum in the second wireless communications system and that is obtained by the second wireless communications system, so as to avoid a reduction of service continuity of the user equipment caused by random service bearer allocation in the second wireless communications system, thereby improving experience of the user equipment.

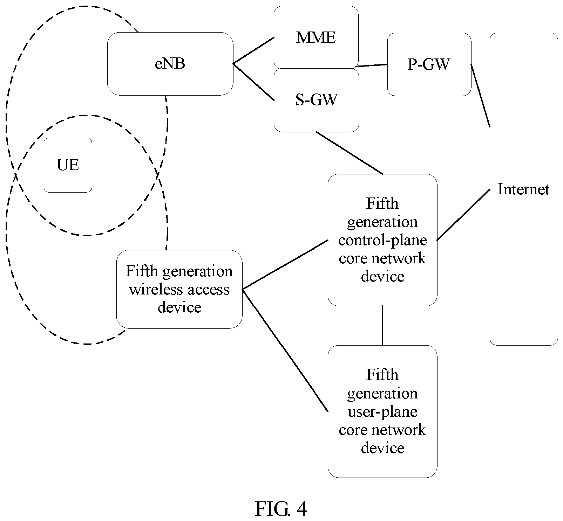

FIG 4 shows a schematic diagram of a system architecture of an inter-system information exchange method according to one aspect of an embodiment of the present application. The system architecture includes a fifth generation wireless communications system and an LTE wireless communications system.

The fifth generation wireless communications system includes a fifth generation access network and a fifth generation core network. The fifth generation access network includes at least one fifth generation wireless access device. The fifth generation core network includes at least one fifth generation core network device, for example, a fifth generation control-plane core network device and a fifth generation user-plane core network device.

The LTE wireless communications system includes an LTE access network and an LTE core network. A wireless access device in the LTE access network is an evolved NodeB (evolved NodeB, eNB), and the evolved NodeB is further referred to as an evolved wireless access device. A control-plane core network device in the LTE core network includes a serving gateway (serving gateway, S-GW) and a mobility management entity (mobility management entity, MME), and a user-plane core network device in the LTE core network includes a packet data gateway (packet data gateway, P-GW).

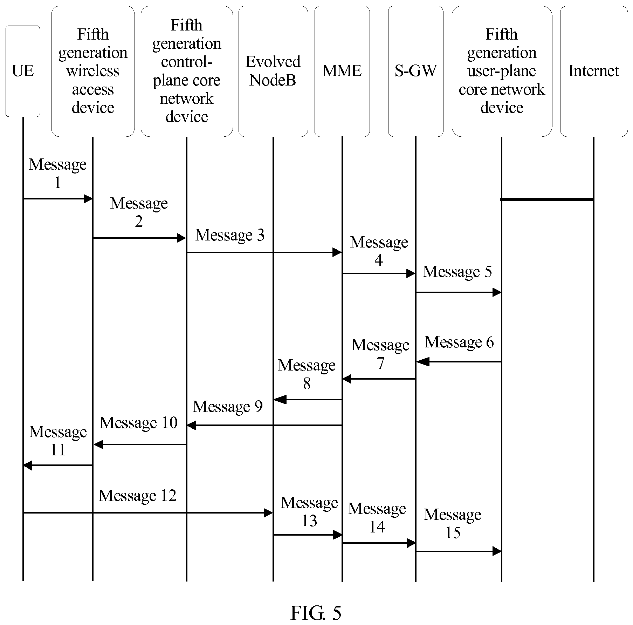

Based on the system architecture shown in FIG 4, an embodiment provides an inter-system information exchange method. FIG 5 shows a schematic interaction diagram of the inter-system information exchange method, including the following content. This embodiment is a further supplement and refinement of the method embodiment shown in FIG 3. Repeated content may not be described again. Reference may be made to the method embodiment shown in FIG 3. In this embodiment, the first wireless communications technology is a fifth generation communications technology, the first wireless communications system is a fifth generation wireless communications system, the second wireless communications technology is an LTE technology, and the second wireless communications system is an LTE wireless communications system. Therefore, this embodiment mainly relates to a handover of a service of the user equipment from the fifth generation wireless communications system to the LTE wireless communications system.

501. Optionally, the user equipment sends a message 1 that carries a measurement report to a fifth generation wireless access device.

In 501, the measurement report includes a measurement result of signal strength and received signal quality of a signal sent by an eNB, such as RSRP and RSRQ.

502. Optionally, the fifth generation wireless access device determines, according to the measurement report reported by the user equipment, to hand over the user equipment to the LTE system in which the eNB is located.

The fifth generation wireless access device may perform determining according to whether the signal strength or the signal received quality in the measurement report meets a handover condition. For details of the handover condition, refer to a definition in a 3GPP protocol. For example, if the fifth generation wireless access device determines that at least one of the RSRP and the RSRQ exceeds a threshold, the fifth generation wireless access device determines to hand over the user equipment to the LTE system in which the eNB is located.

503. The fifth generation wireless access device sends a message 2 that carries a handover request to a fifth generation control-plane core network device, where the message 2 carries a quality of service identifier corresponding to a quality of service parameter of each service flow that is provided by the fifth generation wireless communications system on a NAS stratum for the service of the user equipment.

In the fifth generation wireless communications system, on the NAS stratum, quality of service of the service of the user equipment is classified on a QoS flow (QoS flow) basis. One type of quality of service is indicated by a quality of service parameter, and the quality of service parameter determines whether the quality of service is good or poor. Different service flows may provide different quality of service. The quality of service identifier of the service flow on the NAS stratum may be replaced or mapped by a flow identifier of the service flow on the NAS stratum. One service data flow of the user equipment may be carried on a plurality of service flows, which provide different quality of service for different data packets in the service data flow. The plurality of service flows form one service bearer group on the NAS stratum or the service bearer group is referred to as a service flow group. The fifth generation wireless communications system maps one service flow group including at least one service flow to one service bearer on an access stratum in the fifth generation wireless communications system. Service flows of different groups are mapped to different service bearers on the access stratum. Different service flows may be distinguished from each other by using flow identifiers. For example, the NAS stratum in the fifth generation wireless communications system includes a service flow 1 providing quality of service 1, a service flow 2 providing quality of service 2, a service flow 3 providing quality of service 3, and a service flow 4 providing quality of service 4. The service flow 1 and the service flow 2 of the fifth generation wireless communications system are considered as one group and mapped to a service bearer 1 on the access stratum in the fifth generation wireless communications system, and the service flow 3 and the service flow 4 are mapped to a service bearer 2 as one group.

A service flow is obtained by filtering a service data flow by using a traffic flow template (Traffic Flow Template, TFT). The TFT template refers to some features of the service data flow, for example, an IP 5-tuple, which refers to a source IP address, a destination IP address, a source port number, a destination port number, and a used transmission protocol that are of the service data flow. Specific values of several elements in the 5-tuple may be used to form the TFT template, so that a service flow that has a specific quality of service parameter can be obtained from the service data flow through filtering. One service flow is corresponding to a specific quality of service parameter, and a quality of service parameter corresponding to a TFT template may be configured by a wireless communications system.

Optionally, the fifth generation wireless communications system, for example, the fifth generation control-plane core network device may allocate a unique group identifier on the NAS stratum to one group of service flows, to identify the service flow group on the NAS stratum. Optionally, the fifth generation wireless communications system, for example, the fifth generation control-plane core network device may allocate a unique group identifier on the access stratum to one group of service flows, to identify the service flow group on the access stratum. For example, because one group of service flows is mapped to one service bearer, an identifier of the one service bearer may be used as a group identifier of the group of flows. For another example, a group identifier of one group of service flows may also be different from an identifier of a service bearer to which the group of service flows is mapped on the access stratum in the fifth generation wireless communications system. In this case, the group identifier of the group of flows is in a one-to-one correspondence with the identifier of the service bearer to which the group of service flows is mapped on the access stratum.

Optionally, the message 2 may further include a PDU session identifier of the service flow, for example, may carry a PDU session identifier of each service flow group.

Optionally, to enable the fifth generation control-plane core network device to learn of a wireless communications system to which the user equipment requests to be handed over, the message 2 carries an identifier of a wireless access device in the wireless communications system to which the user equipment requests to be handed over. In this embodiment, the wireless access device in the wireless communications system to which the user equipment requests to be handed over is an evolved wireless access device in the LTE system.

504. After receiving the message 2, the fifth generation control-plane core network device generates, according to a quality of service rule of each service flow that is on the NAS stratum and that is provided by the fifth generation wireless communications system for the service of the user equipment, configuration information of a service bearer that is of a group in which the service flow is located and that is in the LTE system. The quality of service rule includes at least one of a quality of service parameter corresponding to the service flow, a TFT template, and a TFT priority.

In a possible implementation, the fifth generation control-plane core network device maps one group of service flows to one service bearer in the LTE system, and maps different groups of service flows to different service bearers in the LTE system. Specifically, the fifth generation control-plane core network device combines a quality of service parameter and a traffic flow template (traffic flow template, TFT) of one group of service flows to obtain configuration information of a service bearer of the group of service flows in the LTE system. The configuration information of the service bearer includes at least one of a TFT, a TFT priority, a quality of service parameter, and an identifier of the service bearer. As described in 503, the identifier of the service bearer is the same as a group identifier of the group of service flows, or the identifier of the service bearer in the LTE system is in a one-to-one correspondence with the group identifier of the group of service flows on the NAS stratum or the access stratum in the fifth generation wireless communications system. Optionally, the configuration information of the service bearer of the group of service flows in the LTE system further includes a PDU session identifier.

505. The fifth generation control-plane core network device sends, to a mobility management entity (MME) in the LTE system by using a message 3, determined configuration information of the service bearer that is of the group in which each service flow is located and that is in the LTE system.

506. The mobility management entity sends the configuration information of the service bearer to a serving gateway (S-GW) by using a message 4.

507. If the serving gateway allows the configuration of the service bearer, the serving gateway sends the configuration information of the service bearer in the LTE system to a fifth generation user-plane core network device by using a message 5.

It should be noted that, the message 3, the message 4, and the message 5 may further carry indication information. The indication information indicates that the configuration information of the service bearer in the LTE system is generated by the fifth generation control-plane core network device.

Optionally, if the fifth generation user-plane core network device does not allow the configuration of the service bearer, the fifth generation user-plane core network device updates the configuration information of the service bearer, and sends updated configuration information of the service bearer to the serving gateway by using a message 6. Then, the serving gateway sends the updated configuration information of the service bearer to the mobility management entity by using a message 7.

Optionally, if the fifth generation user-plane core network device allows the configuration of the service bearer, the fifth generation user-plane core network device notifies, by using a message 6, the serving gateway that the configuration of the service bearer is allowed.

If the configuration information of the service bearer is updated, the message 6 includes the updated configuration information of the service bearer. If the configuration information of the service bearer is not updated, the message 6 may include the configuration information of the service bearer in the message 5, or the message 6 may not include the configuration information of the service bearer in the message 5. If the message 6 does not include the configuration information of the service bearer in the message 5, after receiving the message 6, the serving gateway considers by default that the configuration information of the service bearer is not updated.

508. The serving gateway sends the configuration information of the service bearer to the mobility management entity by using a message 7.

If the configuration information of the service bearer is updated, the message 7 includes the updated configuration information of the service bearer. If the configuration information of the service bearer is not updated, the message 7 includes the configuration information of the service bearer in the message 5.

509. After receiving the message 7, the mobility management entity instructs, by using a message 8, an evolved wireless access device to make handover preparation. The message 8 includes configuration information of at least one service bearer on an entire path between the user equipment and the core network. The configuration information of the at least one service bearer on the entire path between the user equipment and the core network includes configuration information of a bearer between the user equipment and the access network, and configuration information of a bearer between the access network and the core network.

Optionally, the message 8 further includes a destination address of uplink data sent by the user equipment, for example, the destination address is an address of the serving gateway.

510. If the evolved wireless access device completes handover preparation, the evolved wireless access device notifies the mobility management entity of the completion of handover preparation.

Optionally, when handover preparation is completed, the evolved wireless access device further notifies the mobility management entity of an allowed or not allowed service bearer in the at least one service bearer in the message 8.

511. The mobility management entity notifies, by using a message 9, the fifth generation control-plane core network device that handover preparation is completed.

Optionally, when the mobility management entity notifies the fifth generation control-plane core network device that handover preparation is completed, the mobility management entity further indicates an identifier of a service bearer ready for handover and quality of service provided by the service bearer ready for handover.

In this embodiment, the message 9 further includes tunnel information of a data forwarding tunnel, and the tunnel information includes a tunnel identifier, a tunnel address, and the like. Further, the data forwarding tunnel may be established on a direct interface between the fifth generation wireless access device and the evolved wireless access device in the target LTE system, or may be established by using an indirect interface. The data forwarding tunnel is established by using the fifth generation user-plane core network device and/or a user-plane core network device in the target LTE system. The data forwarding tunnel may be established separately per an uplink and a downlink of each group of service flows. Further, the data forwarding tunnel may be parted and each part may use different granularities. That is, a data forwarding tunnel in the fifth generation system is established per granularity of a PDU session; in the target LTE system, a data forwarding tunnel is established based on a service bearer granularity. Specifically, for downlink data forwarding, the fifth generation wireless communications system forwards the downlink data to the fifth generation user-plane core network device (UPGW) over a tunnel established per the PDU session. A forwarded data packet header carries an identifier of a service flow, and the identifier may be mapped to quality of service of the service flow. The fifth generation user-plane core network device transmits, according to a mapping relationship between a NAS stratum service flow group and a NAS stratum service bearer in the target LTE system, a data packet of each service flow in the service flow group to a corresponding data forwarding tunnel, and removes an identifier of the service flow from a data packet header. In the target LTE system, the evolved wireless access device preferably sends a data packet received from the data forwarding tunnel, and subsequently sends a fresh data packet received from a user-plane core network device. Further, one data forwarding tunnel may be established per one user equipment, and a forwarded data packet carries an identifier of a service flow and a PDU session identifier.

In another implementation, the data forwarding tunnel is established between the fifth generation wireless communications system and the fifth generation user-plane core network device. The fifth generation wireless communications system forwards downlink data to the fifth generation user-plane core network device (UPGW) over a tunnel established per the PDU session. A forwarded data packet header carries an identifier of a service flow, and the identifier may be mapped to a quality of service rule of the service flow. The fifth generation user-plane core network device sends a data packet of the service flow to a corresponding downlink tunnel of a corresponding service bearer according to a mapping relationship between a service flow group and a service bearer in the target LTE system. The fifth generation user-plane core network device preferably sends a data packet received from the data forwarding tunnel, and subsequently sends a fresh data packet to the evolved wireless access device in the LTE system, for example, a fresh service data flow from the Internet.

512. The fifth generation control-plane core network device instructs, by using a message 10, the fifth generation wireless access device to perform a handover. Optionally, the message 10 includes at least one group of service flows that can be admitted in the LTE system, and information (optional) about a tunnel for data forwarding of the at least one group of service flows. A group of service flows may be indicated by using an access stratum group identifier or a non-access stratum group identifier. Optionally, the service flow group may be indicated by using an access stratum identifier or a non-access stratum identifier of a service bearer in the corresponding LTE system.

The fifth generation wireless access device forwards downlink data, and the forwarded data may include all PDCP SDUs (PDCP service data unit) for which no reception acknowledgement is received from the user equipment, or all PDCP SDUs that have not been sent to the user equipment. In addition, fresh data obtained from the fifth generation user-plane core network device is forwarded to the target evolved wireless access device in the target LTE system.

513. The fifth generation wireless access device instructs, by using a message 11, the user equipment to access the wireless access device in the LTE system.

The message 11 includes quality of service information of the NAS stratum service bearer ready for handover, a correspondence between an identifier of a NAS stratum service bearer in the LTE system and quality of service information of the bearer, and a correspondence between an identifier of a NAS stratum service bearer in the LTE system and a radio bearer of the wireless access device in the LTE system. Further, the message 11 may further include a correspondence between an identifier of a NAS stratum service bearer in the LTE system and a group identifier of a group of service flows in the fifth generation wireless communications system. The quality of service information includes information such as a TFT template and a TFT priority. Optionally, the quality of service information further includes a correspondence between an identifier of an AS stratum service bearer in the fifth generation wireless communications system and a radio bearer of the wireless access device in the LTE system.

514. The user equipment accesses an evolved NodeB in the LTE system by using a message 12, and starts to transmit data.

The user equipment may start to perform transmission starting from a data packet (for example, a PDCP service data unit) that is not started for transmission in the fifth generation wireless communications system, and transmit data on a corresponding service bearer according to quality of service required by the data packet.

Specifically, the user equipment sends, on a corresponding radio bearer, a data packet (for example, a PDCP service data unit, namely, a PDCP SDU) that is not acknowledged for transmission in the fifth generation wireless communications system. The user equipment sends the uplink data packet on a corresponding radio bearer of the wireless access device according to a correspondence between a service flow group and an identifier of a NAS stratum service bearer in the LTE system and the correspondence between an identifier of a NAS stratum service bearer in the LTE system and a radio bearer in the wireless access device in the LTE system. Alternatively, according to an access stratum radio bearer of the service flow group in the fifth generation wireless communications system, the user equipment sends the uplink data packet to a wireless access device corresponding to the access stratum radio bearer.

For example, the user equipment first sends a data packet that is not acknowledged for successful transmission in the fifth generation wireless communications system, and then sends a data packet obtained by using the quality of service information of the service bearer that is configured by the LTE system. Specifically, the uplink data packet is sent on a corresponding radio bearer according to the correspondence between an identifier of a service bearer in the LTE system and a radio bearer of the wireless access device in the LTE system.

515. The wireless access device in the LTE system notifies, by using a message 13, the mobility management entity that the user equipment has accessed.

516. The mobility management entity instructs the serving gateway by using a message 14, to switch a data transmission channel to the LTE system. The message 14 includes an address of a transmission tunnel of the service bearer and an identifier of the transmission tunnel.

517. The serving gateway notifies, by using a message 15, the fifth generation user-plane core network device that the service of the user equipment is handed over to the LTE system. The message 15 includes the address of the transmission tunnel and the identifier of the transmission tunnel.

The fifth generation user-plane core network device converts a processing type of the service bearer on the NAS stratum from a service flow (or a service flow group) into a service bearer on the NAS stratum, switches a tunnel of the service bearer to the SGW, and sends an end marker on a data channel of the service flow.

518. The mobility management entity instructs the fifth generation user-plane core network device to release a context of the user equipment, and the fifth generation user-plane core network device instructs the fifth generation wireless access device to release the context of the user equipment.

According to the technical solution provided in this embodiment of the present application, the fifth generation control-plane core network device establishes a correspondence between a NAS stratum service flow group (NAS stratum service bearer group) and a NAS stratum service bearer in the LTE system, so that after the service of the user equipment is handed over to the LTE system, service continuity can be improved after the service of the user equipment is handed over to the LTE system.

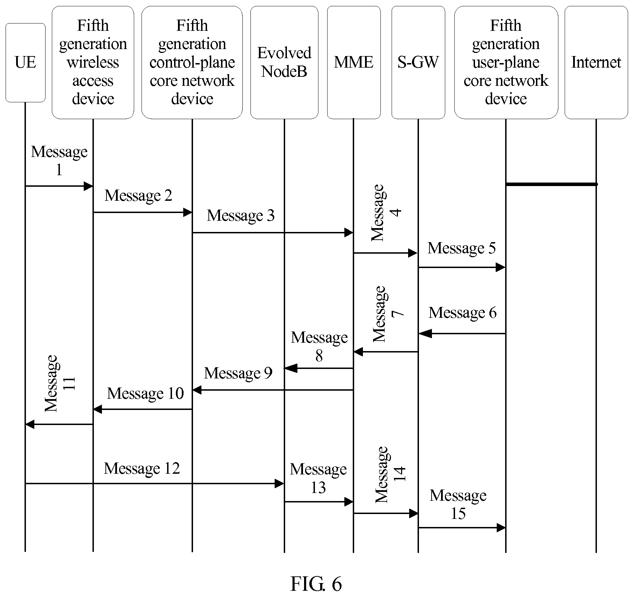

Based on the system architecture shown in FIG 4, an inter-system information exchange method is provided as an example which is not according to the invention and is present for illustartion purposes only. FIG 6 shows a schematic interaction diagram of the inter-system information exchange method. This example is a further supplement and refinement of the method embodiment shown in FIG 3. Repeated content may not be described again. Reference may be made to the method embodiment shown in FIG 3. In this example, the first wireless communications technology is a fifth generation communications technology, the first wireless communications system is a fifth generation wireless communications system, the second wireless communications technology is an LTE technology, and the second wireless communications system is an LTE wireless communications system. Therefore, this example mainly relates to a handover of a service of the user equipment from the fifth generation wireless communications system to the LTE wireless communications system.

601 to 603 are the same as 501 to 503.

604. The fifth generation control-plane core network device receives the message 2, and forwards, to a mobility management entity in the LTE system by using a message 3, the quality of service identifier of quality of service of each service flow that is provided by the fifth generation wireless communications system on the NAS stratum for the service of the user equipment.

The message 3 further includes a group identifier of each service flow group on the NAS stratum. Optionally, the message 3 further includes a group identifier of each service flow group on a corresponding AS stratum.

Further, the message 3 further includes a quality of service rule of a service flow, and the quality of service rule includes a quality of service parameter corresponding to the service flow, a TFT template, and a TFT priority. Further, the message 3 may further include a PDU session identifier of the service flow.

605. The mobility management entity receives the quality of service identifier that is in the message 3 and that is of quality of service of each service flow provided by the fifth generation wireless communications system on the NAS stratum for the service data flow of the user equipment, and generates configuration information of a service bearer that is in the LTE system and that is corresponding to a group in which each service flow is located.

Similar to the configuration information that is generated by the fifth generation control-plane core network device in 505 and that is of the service bearer of each service flow group in the LTE system, the mobility management entity maps one group of service flows to one service bearer in the LTE system, and maps different groups of flows to different service bearers in the LTE system. Specifically, the mobility management entity combines a quality of service parameter and a traffic flow template (traffic flow template, TFT) of one group of service flows to obtain configuration information of a service bearer of the group of service flows in the LTE system. The configuration information of the service bearer includes a TFT, a TFT priority, a quality of service parameter, an identifier of the service bearer, and the like. As described in 503, the identifier of the service bearer is the same as a group identifier of the group of service flows, or the identifier of the service bearer is in a one-to-one correspondence with the group identifier of the group of service flows on the NAS stratum or the access stratum.

606 to 618 are the same as 506 to 518. According to the technical solution provided in thisexample, the mobility management entity maps quality of service of a service flow to a bearer in the LTE system, so as to ensure data transmission continuity in a handover process.

In another possible implementation, in step 605, if a service bearer in the LTE system that is generated by the mobility management entity is not in a one-to-one correspondence with a service flow group, the mobility management entity notifies the fifth generation control-plane core network device of configuration information of the service bearer in the LTE system. Further, the LTE system indicates, to the fifth generation wireless communications system, that the service bearer is not in a one-to-one correspondence with the service flow group. The control-plane core network device of the fifth generation wireless communications system generates a fresh service flow group according to the configuration information of the service bearer in the LTE system, and sends the fresh service flow group to the fifth generation wireless access device. The fifth generation wireless access device performs re-configuration of a mapping relationship between a service flow and a radio bearer according to information about the fresh service flow group, and then initiates a handover. Remaining steps are the same as 606 to 618.

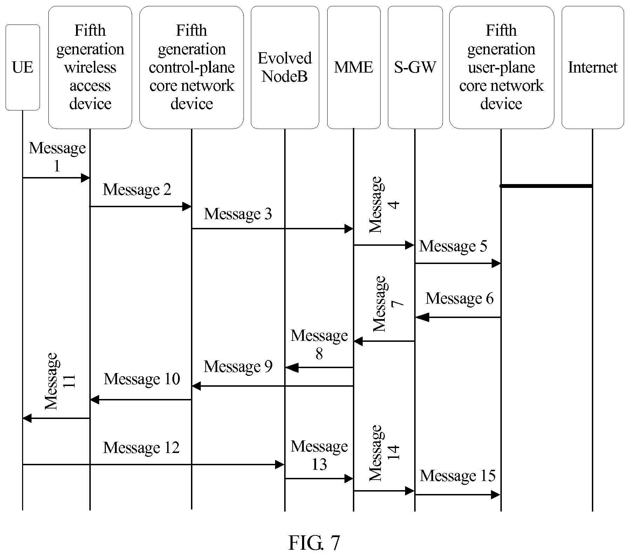

Based on the system architecture shown in FIG 4, an inter-system information exchange method is provided as an example which is not according to the invention and is present for illustartion purposes only. FIG 7 shows a schematic interaction diagram of the inter-system information exchange method. This example is a further supplement and refinement of the method embodiment shown in FIG 3. Repeated content may not be described again. Reference may be made to the method embodiment shown in FIG 3. In thisexample, the first wireless communications technology is a fifth generation communications technology, the first wireless communications system is a fifth generation wireless communications system, the second wireless communications technology is an LTE technology, and the second wireless communications system is an LTE wireless communications system. Therefore, this example mainly relates to a handover of a service of the user equipment from the fifth generation wireless communications system to the LTE wireless communications system.

701 to 703 are the same as 501 to 503.

704. The fifth generation control-plane core network device sends a message 3 to the mobility management entity, where the message 3 carries quality of service of each service flow that is on a NAS stratum and that is provided by the fifth generation wireless communications system for the service of the user equipment. The message 3 further includes a group identifier of each service flow group on the NAS stratum. Optionally, the message 3 further includes a group identifier of each service flow group on a corresponding AS stratum.

Further, the message 3 further includes a quality of service rule of a service flow, and the quality of service rule includes a quality of service parameter corresponding to the service flow, a TFT template, and a TFT priority.

Further, the message 3 may further include a PDU session identifier of the service flow.

705. The mobility management entity sends a message 4 to a serving gateway, where the message 4 carries quality of service of each service data flow that is on the NAS stratum and that is provided by the fifth generation wireless communications system for the service of the user equipment.

The message 4 further includes the group identifier of each service flow group on the NAS stratum. Optionally, the message 4 further includes the group identifier of each service flow group on the corresponding AS stratum.

Further, the message 4 further includes a quality of service rule of a service flow, and the quality of service rule includes a quality of service parameter corresponding to the service flow, a TFT template, and a TFT priority.

Further, the message 4 may further include a PDU session identifier of the service flow.

706. The serving gateway sends a message 5 to the fifth generation user-plane core network device, where the message 5 carries the quality of service of each service flow that is on the NAS stratum and that is provided by the fifth generation wireless communications system for the service of the user equipment.

The message 5 further includes the group identifier of each service flow group on the NAS stratum. Optionally, the message 5 further includes the group identifier of each service flow group on the corresponding AS stratum.

Further, the message 5 further includes a quality of service rule of a service flow, and the quality of service rule includes a quality of service parameter corresponding to the service flow, a TFT template, and a TFT priority. Further, the message 5 may further include a PDU session identifier of the service flow.

707. The fifth generation user-plane core network device generates, according to the quality of service of each service flow that is on the NAS stratum and that is provided by the fifth generation wireless communications system for the service of the user equipment, configuration information of a service bearer that is of a group in which the service flow is located and that is in the LTE system.

Similar to 505 that the fifth generation control-plane core network device generates the configuration information of a service bearer that is corresponding to a group in which each service flow is located and that is in the LTE system, the fifth generation user-plane core network device maps one group of service flows to one service bearer in the LTE system, and maps different groups of service flows to different service bearers in the LTE system. Specifically, the fifth generation user-plane core network device combines a quality of service parameter and a traffic flow template of one group of service flows to obtain configuration information of a service bearer that is of the group of service flows and that is in the LTE system. The configuration information of the service bearer includes a TFT, a TFT priority, a quality of service parameter, an identifier of the service bearer, and the like. As described in 503 in the foregoing embodiment, the identifier of the service bearer is the same as a group identifier of the group of service flows, or the identifier of the service bearer is in a one-to-one correspondence with the group identifier of the group of service flows on the NAS stratum or the access stratum. 708. The fifth generation user-plane core network device sends a message 6 to the serving gateway, where the message 6 carries the configuration information of the service bearer.

709 to 718 are the same as 506 to 518.

According to the technical solution provided in this example of the present application, continuity in a handover process of the user equipment is improved by establishing a correspondence between one service flow group on the NAS stratum in the fifth generation wireless communications system and one service bearer on the NAS stratum in the LTE system. In thisexample, the fifth generation user-plane core network device specifically determines the correspondence. Therefore, after the service of the user equipment is handed over to the LTE system, service continuity can be ensured, and experience after the service of the user equipment is handed over to the LTE system is improved.

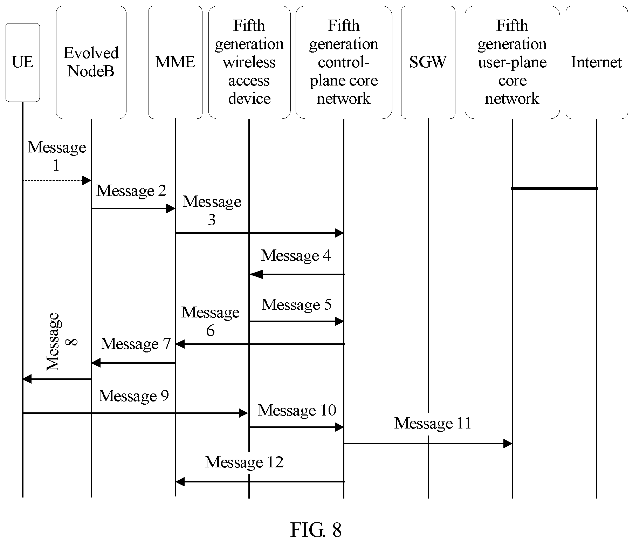

Based on the system architecture shown in FIG 4, an inter-system information exchange method is provided as an example which is not according to the invention and is present for illustartion purposes only. FIG 8 shows a schematic interaction diagram of the inter-system information exchange method. This example is a further supplement and refinement of the method embodiment shown in FIG 3. Repeated content may not be described again. Reference may be made to the method embodiment shown in FIG 3. In this example, the second wireless communications technology is a fifth generation communications technology, the second wireless communications system is a fifth generation wireless communications system, the first wireless communications technology is an LTE technology, and the first wireless communications system is an LTE wireless communications system. Therefore, this example mainly relates to a handover of a service of the user equipment from the LTE wireless communications system to the fifth generation wireless communications system.

801. Optionally, the user equipment sends a message 1 that carries a measurement report to an evolved wireless access device.

In 801, the measurement report includes a measurement result of signal strength and received signal quality of a signal sent by a fifth generation wireless access device.

802. Optionally, the evolved wireless access device determines, according to the measurement report reported by the user equipment, to hand over the user equipment to the fifth generation wireless communications system in which the fifth generation wireless access device is located.

The evolved wireless access device may perform determining according to whether the signal strength or the signal received quality in the measurement report meets a handover condition. For example, when determining that the signal strength or the signal received quality of the signal sent by the fifth generation wireless access device exceeds a threshold, the evolved wireless access device determines to hand over the user equipment to the fifth generation wireless communications system.

803. The evolved wireless access device sends a message 2 to a mobility management entity, where the message 2 includes an identifier of a target wireless access device to which the user equipment is to be handed over (an identifier of the fifth generation wireless access device in thisexample) and a handover reason.

804. After receiving the message 2, the mobility management entity sends a message 3 to a fifth generation control-plane core network device in the fifth generation wireless communications system. The message 3 indicates configuration information of at least one service bearer provided by the LTE system for the service of the user equipment, and the configuration information of the at least one service bearer includes an identifier of the at least one service bearer and a quality of service parameter. Optionally, the configuration information of the at least one service bearer further includes a TFT and a TFT priority that are corresponding to the service bearer of the user equipment.

In thisexample, a service bearer includes a bearer between the user equipment and the access network and a bearer between the core network and the access network. In the LTE system, in the service bearer, the bearer between the user equipment and the access network is also referred to as a radio bearer, and the bearer between the core network and the access network is referred to as an S1 bearer and an S5 bearer.

805. The fifth generation control-plane core network device receives the message 3, and generates, according to the configuration information of the service bearer that is provided by the LTE system for the service of the user equipment, configuration information of each service flow that is in the fifth generation wireless communications system and that meets a quality of service requirement of a service data flow of the user equipment.

Specifically, the fifth generation control-plane core network device generates the configuration information of each service flow according to the configuration information of the service bearer in the LTE system, and the configuration information of each service flow includes that each service bearer of the service of the user equipment in the LTE system is divided into a plurality of groups, one service bearer is corresponding to one group, and each group includes at least one service flow. Service flows of different groups have different group identifiers on a NAS stratum in the fifth generation wireless communications system. Different service flows have different flow identifiers, different TFTs and TFT priorities, and different service flows provide different quality of service.

806. The fifth generation control-plane core network device sends a handover request to the fifth generation wireless access device by using a message 4. The message 4 includes a group identifier of each group of service flows on the NAS stratum and a flow identifier of each service flow in each group of service flows. The message 4 further includes indication information indicating a quality of service parameter provided by each service flow. Optionally, the message 4 further includes a quality of service parameter corresponding to indication information of quality of service. Further, the flow identifier and the indication information of the quality of service parameter have a correspondence, or the flow identifier indicates the quality of service parameter.

Further, the message 4 further includes indication information for establishing a service bearer per a service flow group, which instructs a wireless access network device to establish a radio bearer per a service flow group. That is, each service flow group is corresponding to one radio bearer. The indication information may also be indicated in an implicit manner, for example, implicitly indicated by using a NAS stratum group identifier of a service flow group.

Further, the message 4 may further include a PDU session identifier of the service flow or the service flow group.

807. The fifth generation wireless access device receives the message 4, and maps service flows of a same group to a same radio bearer by using an access stratum.

808. The fifth generation wireless access device sends a message 5 to the fifth generation control-plane core network device, where the message 5 indicates a group that is mapped successfully and a group that is not mapped successfully in 807. Optionally, the message 5 further includes data forwarding tunnel information, and the tunnel information includes one or more of tunnel address information, tunnel identifier information, and the like. A successfully mapped group is a service flow group corresponding to a radio bearer that is ready for handover on a target side. A data forwarding tunnel is corresponding to the successfully mapped service flow group, and one service flow group is corresponding to one data forwarding tunnel. The data forwarding tunnel is established between the evolved wireless access device and the fifth generation wireless access device.

Further, the message 5 further carries indication information indicating whether the fifth generation wireless access device performs admission according to a service flow group indicated by the control-plane core network device. Further, the indication information may be indicated according to a radio bearer corresponding to a service flow group or a service flow group.

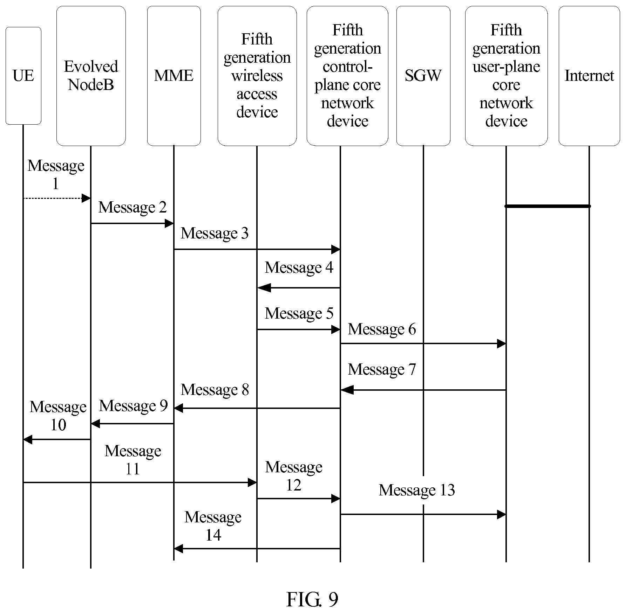

As an example, if the fifth generation wireless access device can perform admission and mapping by the service flow group, go to 809. If the fifth generation wireless access device performs admission and mapping not according to the service flow group, reference may be made to another example described in FIG 9 below.

809. The fifth generation control-plane core network device notifies the mobility management entity of the successfully mapped group and corresponding data forwarding tunnel information by using a message 6. The message 6 further indicates a service bearer corresponding to the successfully mapped service flow group.

810. The mobility management entity sends a message 7 to the evolved wireless access device, where the message 7 includes a handover instruction that instructs the user equipment to be handed over to the fifth generation wireless communications system.

Optionally, the message 7 further includes data forwarding tunnel information for forwarded data transmission performed on the successfully mapped group from the evolved wireless access device to the fifth generation wireless access device. The forwarded data is transmitted by using a data forwarding tunnel between the evolved wireless access device and the fifth generation wireless access device. The forwarded data is included in a PDCP service data unit that is not acknowledged by the user equipment for correct reception and that is in the LTE system, or a PDCP service data unit that is not sent to the user equipment and that is in the LTE system. The forwarded data further includes fresh data to be sent to the user equipment.

811. The evolved wireless access device sends the handover instruction to the user equipment by using a message 8. The message 8 further indicates a service flow that is provided by the fifth generation wireless communications system for the service of the user equipment, a quality of service rule of the service flow, and a NAS stratum or AS stratum service bearer corresponding to the service flow group in the LTE system.

812. The user equipment switches the service to the fifth generation wireless access device by using a message 9, and transmits data according to the service flow indicated in the message 8 and a radio bearer to which the fifth generation wireless access device maps the service flow.

Specifically, the user equipment sends, on a corresponding radio bearer, a data packet (for example, a PDCP service data unit (PDCP SDU)) that is not acknowledged for successful transmission in the LTE wireless communications system. The user equipment sends the uplink data packet on a corresponding radio bearer in the fifth generation wireless access device according to a correspondence between a service bearer in the LTE system and an identifier of a service flow group in the fifth generation wireless communications system, and a correspondence between an identifier of a service flow group and a radio bearer in the fifth generation wireless access device. The user equipment sends the data on the radio bearer in the LTE system according to the service flow.

Alternatively, the user equipment sends the data on a radio bearer that is in the fifth generation wireless communications system and that is corresponding to a radio bearer in the LTE system corresponding to the service bearer in the LTE system. The user equipment first sends a data packet that is not acknowledged for successful transmission in the LTE system, and then sends a data packet obtained by using quality of service information of a service bearer that is configured by the fifth generation wireless communications system.

813. The fifth generation wireless access device sends a message 10 to the fifth generation control-plane core network device to indicate that the user equipment is successfully handed over.

Optionally, after the user equipment is successfully handed over, the fifth generation control-plane core network device adjusts a service flow in which the service of the user equipment is located and a bearer to which the service flow is mapped, so as to continuously improve quality of service of the user equipment.

816. The fifth generation control-plane core network device sends a message 11 to the fifth generation user-plane core network device to hand over the service of the user equipment from the LTE system to the fifth generation wireless communications system. The message 11 includes a quality of service rule of the service flow in which the service of the user equipment is located, and the quality of service rule includes at least one of a quality of service parameter, a TFT, and a TFT priority.

817. The fifth generation control-plane core network device instructs, by using a message 12, the mobility management entity to release a context of the user equipment in the LTE system.

818. The mobility management entity instructs the evolved wireless access device to release the context of the user equipment.

According to the technical solution provided in this embodiment of the present application, continuity in a handover process of the user equipment is improved by establishing a correspondence between one service flow group on the NAS stratum in the fifth generation wireless communications system and one service bearer on the NAS stratum in the LTE system. As shown in FIG 9, an inter-system service information exchange method is provided as an example which is not according to the invention and is present for illustartion purposes only. Sending of a message 1 to a message 4 is the same as that in the example shown in FIG 8. Further, a message 5 to a message 14 are described in thisexample. This example may be independently performed as a separateexample , or may be combined with the example shown in FIG 8.

The fifth generation wireless access device sends a message 5 to a fifth generation control-plane core network device, and the message 5 includes a service flow group corresponding to a radio bearer established during handover preparation of the fifth generation wireless access device. The message 5 includes endpoint information that is on the fifth generation wireless access device side and that is of a PDU session tunnel corresponding to a successfully admitted downlink service flow.

Optionally, the message 5 further includes data forwarding tunnel information, and the tunnel information includes one or more of tunnel address information, tunnel identifier information, and the like. A successfully mapped group is a service flow group that is ready for handover in a fifth generation wireless communications system. A data forwarding tunnel is corresponding to a PDU session of the successfully mapped service flow group, and one PDU session is corresponding to one data forwarding tunnel.

Further, the data forwarding tunnel may be in a one-to-one correspondence with the service flow. The data forwarding tunnel is established between the fifth generation wireless access device and the fifth generation user-plane core network device. The data forwarding tunnel may be defined as a target-side data forwarding tunnel. Likewise, a data forwarding tunnel in an LTE system refers to a data forwarding tunnel established between the evolved NodeB and the fifth generation user-plane core network device.

The fifth generation control-plane core network device notifies the fifth generation user-plane core network device of a successfully mapped service flow and target-side data forwarding tunnel information by using a message 6. The data forwarding tunnel information includes one or more of address information, identifier information, and the like that are of the target-side data forwarding tunnel.

The message 6 further includes a quality of service rule of a service flow in which a service of the user equipment is located, and the quality of service rule includes a quality of service parameter, a TFT, and a TFT priority.

Optionally, the fifth generation user-plane core network device notifies LTE of the data forwarding tunnel information by using a message 7. The data forwarding tunnel is used by the evolved NodeB of the LTE system to downlink forwarded data to the fifth generation user-plane core network device.

The message 7 includes endpoint information that is on the fifth generation user-plane core network device side and that is of a PDU session tunnel corresponding to an uplink service flow. The fifth generation control-plane core network device notifies, by using a message 8, the mobility management entity of target-side admission information of a service bearer in a handover request, including a bearer that is successfully admitted, a bearer that is not successfully admitted, and an identifier of a bearer that is partly successfully admitted. The bearer that is partly successfully admitted means that only some of a plurality of service flows corresponding to the bearer are successfully admitted on the target side.

Further, the message 8 further includes data forwarding tunnel information on a source side. The data forwarding tunnel is corresponding to one service bearer on the source side, or may be corresponding to one PDN link.

The mobility management entity sends a message 9 to the evolved NodeB, where the message 9 includes a handover instruction that instructs the user equipment to be handed over to the fifth generation wireless communications system.

Optionally, the message 9 further includes forwarding information for data forwarding that is performed on a service bearer successfully admitted on the target side and that is from the evolved NodeB to the fifth generation user-plane core network device, and further includes data forwarding information for data forwarding that is performed on a service bearer partly successfully admitted and that is from the evolved NodeB to the fifth generation user-plane core network device. The downlink forwarded data is included in a PDCP service data unit that is not acknowledged by the user equipment for correct reception and that is in the LTE system, or a PDCP service data unit that is not sent to the user equipment in the LTE system. The forwarded data further includes fresh data to be sent to the user equipment.

The evolved NodeB sends the handover instruction to the user equipment by using a message 10. The message 10 further includes a service flow that is provided by the fifth generation wireless communications system for a service data flow of the user equipment, a quality of service rule of the service flow, and a service bearer corresponding to the service flow group in the LTE system. The user equipment switches the service data flow to the fifth generation wireless access device by using a message 11, and transmits data according to the service flow indicated in the message 10 and a radio bearer to which the fifth generation wireless access device maps the service flow. The fifth generation wireless access device sends a message 12 to the fifth generation control-plane core network device to indicate that the user equipment is successfully handed over.

The fifth generation control-plane core network device sends a message 13 to the fifth generation user-plane core network device to hand over the service of the user equipment from the service bearer in the LTE system to the service flow in the fifth generation wireless communications system. The fifth generation user-plane core network device performs downlink data tunnel switching.

The fifth generation user-plane core network device receives forwarded data from the evolved NodeB on the source side, and sends the forwarded data to the fifth generation wireless access device.

Specifically, data forwarding of the LTE system is as follows:
The evolved NodeB sends the forwarded data to the fifth generation user-plane core network device by using a data forwarding tunnel. The data forwarding tunnel is established per a service bearer or per a PDN link. When data forwarding is completed, the evolved NodeB indicates ending of data forwarding on a tunnel basis, for example, by using an end marker. That is, ending of data forwarding per the service bearer may be indicated, or ending of all data forwarding per the PDN may be indicated.

The data forwarding is included in a PDCP service data unit that is not acknowledged by the user equipment for correct reception and that is in the LTE system, or a PDCP service data unit that is not sent to the user equipment in the LTE system. The data forwarding further includes fresh data to be sent to the user equipment.

Data forwarding of the fifth generation wireless communications system is as follows:
The fifth generation user-plane core network device receives forwarded data, divides, according to the quality of service rule of the service flow, the forwarded data into service flows admitted on the target side, and may discard forwarded data of a service flow that is not admitted on the target side. The fifth generation user-plane core network device sends the forwarded data to the fifth generation wireless access device on the target side by using the target-side data forwarding tunnel. The data forwarding tunnel is established per a service flow or per a PDU session. When data forwarding is completed, the fifth generation user-plane core network device indicates ending of data forwarding on a tunnel basis, for example, by using an end marker. That is, ending of data forwarding of each service flow may be indicated, or ending of all data forwarding of the PDU session may be indicated. The fifth generation wireless access device on the target side preferably sends a forwarded data packet, and then sends a newly transmitted data packet from the fifth generation user-plane core network device.

Further, the fifth generation wireless communications system does not establish a data forwarding tunnel, and the fifth generation user-plane core network device transmits the forwarded data by using a PDU session tunnel of a service flow established in a handover preparation phase. The fifth generation user-plane core network device first sends forwarded data received from the LTE system, and then sends fresh data.

The fifth generation control-plane core network device instructs, by using a message 14, the mobility management entity to release a context of the user equipment in the LTE system.

The mobility management entity instructs the evolved eNodeB to release the context of the user equipment.

According to the technical solution provided in thisexample, continuity in a handover process of the user equipment is improved by establishing a correspondence between one service flow group on a NAS stratum in the fifth generation wireless communications system and one service bearer on a NAS stratum in the LTE system. In thisexample, the fifth generation control-plane core network device specifically determines the correspondence, so as to avoid a problem that data packet transmission is not continuous after the service of the user equipment is handed over from the LTE system to the fifth generation wireless communications system.

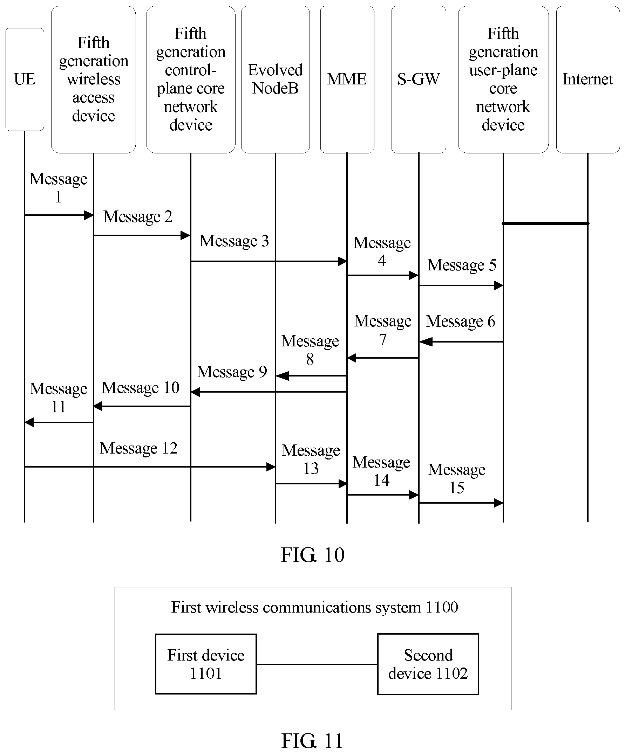

Based on the system architecture shown in FIG 4, an inter-system information exchange method is provided as an example which is not according to the invention and is present for illustartion purposes only. FIG 10 shows a schematic interaction diagram of this inter-system information exchange method. In this example, the first wireless communications technology is a fifth generation communications technology, the first wireless communications system is a fifth generation wireless communications system, the second wireless communications technology is an LTE technology, and the second wireless communications system is an LTE wireless communications system. Therefore, this example mainly relates to a handover of a service data flow of the user equipment from the fifth generation wireless communications system to the LTE wireless communications system.

1001. Optionally, the user equipment sends a message 1 that carries a measurement report to a fifth generation wireless access device.

In 1001, the measurement report includes a measurement result of signal strength and received signal quality of a signal sent by an eNB, such as RSRP and RSRQ.

1002. Optionally, the fifth generation wireless access device determines, according to the measurement report reported by the user equipment, to hand over the user equipment to the LTE system in which the eNB is located.

The fifth generation wireless access device may perform determining according to whether the signal strength or the signal received quality in the measurement report meets a handover condition. For details of the handover condition, refer to a definition in a 3GPP protocol. For example, if the fifth generation wireless access device determines that at least one of the RSRP and the RSRQ exceeds a threshold, the fifth generation wireless access device determines to hand over the user equipment to the LTE system in which the eNB is located.

1003. The fifth generation wireless access device reconfigures all service flows into one radio bearer. Specifically, for an uplink, the fifth generation wireless access device notifies the terminal of a mapping relationship between an uplink service flow and a radio bearer, for example, by using RRC signaling. The terminal maps the uplink service flow to the radio bearer. Further, the radio bearer may be a default radio bearer. The default radio bearer is a radio bearer that is established by the fifth generation wireless access device in a PDU session establishment phase and that serves a service flow of default quality of service.

1004. The fifth generation wireless access device sends a message 2 that carries a handover request to a fifth generation control-plane core network device, where the message 2 carries identifier information of a PDU session corresponding to a default bearer.

1005. After receiving the message 2, the fifth generation control-plane core network device sends the identifier information of the PDU session corresponding to the default bearer in the message 2, to a mobility management entity (MME) in the LTE system by using a message 3.

1006. The mobility management entity establishes, by using a message 4, a message 5, a message 6, and a message 7, the PDU session identified in the message 2.

1007. The mobility management entity instructs, by using a message 8, an evolved NodeB to establish the default bearer. If the default bearer is successfully established, handover preparation for the default bearer is successful in the fifth generation wireless communications system.

1008. The mobility management entity notifies, by using a message 9, the fifth generation control-plane core network device that handover preparation is successful.

Optionally, the message 9 further includes tunnel information of a data forwarding tunnel, and the tunnel information includes a tunnel identifier, a tunnel address, and the like. Further, the data forwarding tunnel may be established on a direct interface between the fifth generation wireless access device and the evolved NodeB in the target LTE system, or may be established by using an indirect interface. For example, the data forwarding tunnel is established by using a fifth generation user-plane core network device or a user-plane core network device in the LTE system. The data forwarding tunnel is established per a default bearer.

1009. The fifth generation control-plane core network device instructs, by using a message 10, the fifth generation wireless access device to perform a handover. The fifth generation wireless access device forwards downlink data, and the forwarded data may include all PDCP SDUs (PDCP service data unit) that are not acknowledged by the terminal for reception, or all PDCP SDUs that have not been sent to the terminal. In addition, fresh data obtained from the fifth generation user-plane core network device is forwarded to the evolved NodeB of the LTE system.

1010. The fifth generation wireless access device instructs, by using a message 11, the user equipment to access a wireless access device in the LTE system.

The message 11 includes configuration information of a service bearer ready for handover. The configuration information of the service bearer includes quality of service information of the service bearer, a correspondence between an identifier of the service bearer and the quality of service information of the bearer, and a correspondence between the identifier of the service bearer and a radio bearer of the wireless access device in the LTE system.

1011. The user equipment accesses the wireless access device in the LTE system by using a message 12, and starts to transmit data.

The user equipment may start to perform transmission starting from a data packet (for example, a PDCP service data unit) that is not started for transmission in the fifth generation wireless communications system, and transmit data on a corresponding service bearer according to quality of service required by the data packet.

Specifically, the user equipment sends, on a corresponding radio bearer, a data packet (for example, a PDCP service data unit, PDCP SDU) that is not acknowledged for transmission in the fifth generation wireless communications system. The user equipment sends the uplink data packet on a corresponding radio bearer according to a correspondence between a service flow and an identifier of a service bearer and a correspondence between an identifier of a service bearer and a radio bearer of the evolved NodeB.

Alternatively, the user equipment sends the data on the radio bearer that is of the evolved NodeB and that is corresponding to a radio bearer of the service flow in the fifth generation wireless communications system. The user equipment first sends a data packet that is not acknowledged for transmission in the fifth generation wireless communications system, and then sends a data packet obtained by using quality of service information of a service bearer that is configured by the LTE system. Specifically, the uplink data packet is sent on the corresponding radio bearer according to the correspondence between the identifier of the service bearer and the radio bearer of the evolved NodeB.

1012. The evolved NodeB in the LTE system notifies, by using a message 13, the mobility management entity that the user equipment has accessed.

1013. The mobility management entity instructs a serving gateway by using a message 14, to switch a data transmission channel to the LTE system. The message 14 includes an address of a transmission tunnel of the service bearer and an identifier of the transmission tunnel.

1014. The serving gateway notifies, by using a message 15, the fifth generation user-plane core network device that the service of the user equipment is handed over to the LTE system. The message 15 includes the address of the transmission tunnel and the identifier of the transmission tunnel.

The fifth generation user-plane core network device converts a processing type of the service bearer from a service flow into a service bearer, switches a tunnel of the service bearer to the SGW, and sends an end marker on a data channel of the service flow.

1015. The mobility management entity instructs the fifth generation user-plane core network device to release a context of the user equipment, and the fifth generation user-plane core network device instructs the fifth generation wireless access device to release the context of the user equipment.

Further, another implementation of data forwarding is that the data forwarding tunnel is established between the fifth generation wireless communications system and the fifth generation user-plane core network device. The fifth generation wireless communications system forwards downlink forwards data to the fifth generation user-plane core network device (UPGW) by using a tunnel established per a PDU session. A forwarded data packet header carries an identifier of a service flow, and the identifier may be mapped to quality of service of the service flow. The fifth generation user-plane core network device sends a data packet of the service flow to a corresponding downlink tunnel of a corresponding service bearer according to a mapping relationship between a service flow group and a service bearer in the target LTE system. The fifth generation user-plane core network device preferably sends a data packet received from the data forwarding tunnel, and then sends a fresh data packet, for example, a fresh data packet from an external network.

According to the technical solution provided in this example, continuity in a handover process of the user equipment is improved by establishing a correspondence between one service flow group on a NAS stratum in the fifth generation wireless communications system and one service bearer on a NAS stratum in the LTE system. In this example, the fifth generation control-plane core network device specifically determines the correspondence.

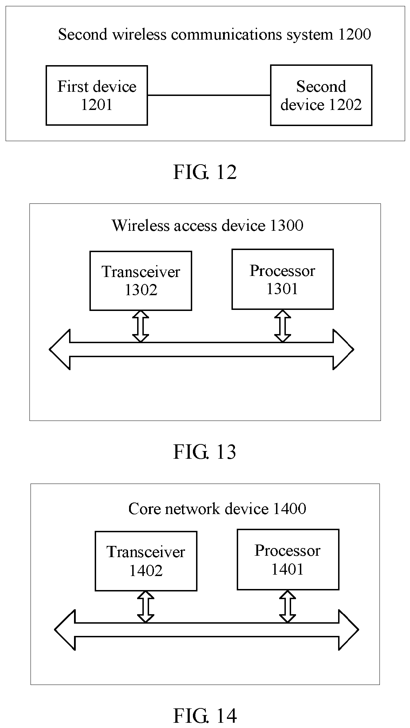

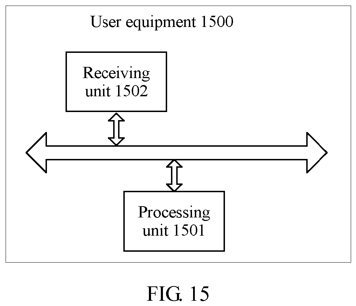

In the following embodiments, as shown in FIG 11 to FIG 15, the embodiments of the present application provide schematic structural diagrams of a first wireless communications system, a second wireless communications system, a wireless access device, a core network device, and user equipment that are used to perform the foregoing method embodiments. The following provides detailed description.

Still another aspect of an embodiment of the present application provides a wireless communications system that can perform the foregoing method embodiments. The wireless communications system is used as a first wireless communications system 1100 to exchange information with a second wireless communications system in a process in which a service of user equipment is transferred from the first wireless communications system to the second wireless communications system. The first wireless communications system and the second wireless communications system use different communications technologiess. The first wireless communications system may be a fifth generation wireless communications system, one service data flow of user equipment in the fifth generation wireless communications system is carried on at least one service flow group (also referred to as a service bearer group) on a NAS stratum, and the service data flow may be separately carried on all service flows in the service flow group after being filtered by using a TFT template. One service flow group on the NAS stratum in the fifth generation wireless communications system is corresponding to one service bearer on an access stratum in the fifth generation wireless communications system. The second wireless communications system may be an LTE system. The service data flow of the user equipment is carried on one service bearer on a NAS stratum in the LTE system, and one service bearer on the NAS stratum in the LTE system is corresponding to one service bearer on an access stratum in the LTE system.

In this embodiment of the present application, the first wireless communications system 1100 includes a first device 1101 and a second device 1102. The first device 1101 and the second device 1102 are logical functional entities. For example, the first device may be a wireless access device in the first wireless communications system or a core network device in the first wireless communications system, and the second device may be a core network device in the first wireless communications system. Herein, the core network device in the first wireless communications system may be a user-plane core network device in the first wireless communications system or a control-plane core network device in the first wireless communications system.

The first device 1101 is configured to determine to transfer the service data flow of the user equipment to the second wireless communications system.

If the first device 1101 is a wireless access device, the wireless access device may be configured to receive a measurement report from the user equipment, and determine, according to a measurement result that is in the measurement report and that is of signal strength and signal quality that are sent by the second wireless communications system (specifically, a wireless access device of the second wireless communications system), to transfer the service data flow of the user equipment to the second wireless communications system.

If the first device 1101 is a core network device, the wireless access device may query or request, according to a determining result of the measurement report, the core network device of the first wireless communications system to perform service transfer. The core network device determines whether to perform service transfer.

The second device 1102 is configured to send first information to the second wireless communications system, where the first information indicates one service bearer that is on a non-access stratum in the second wireless communications system and that is corresponding to one service bearer group of the service data flow of the user equipment on a non-access stratum in the first wireless communications system, and the service bearer group includes at least two service bearers on the non-access stratum in the first wireless communications system.

The second device 1102 is a core network device. When the first device determines to perform service transfer, the second device determines a correspondence between a service bearer group of the service data flow of the user equipment on the NAS stratum and a service bearer on the NAS stratum in the second wireless communications system, and notifies the second wireless communications system of the correspondence by using the first information.

To determine the correspondence, the second device is further configured to receive second information sent by the wireless access device in the first wireless communications system. The second information identifies at least one service bearer group of the service data flow on the non-access stratum in the first wireless communications system, each of the at least one service bearer group is corresponding to one service bearer on an access stratum in the first wireless communications system, and the at least one service bearer group includes the one service bearer group. Therefore, the second device is specifically configured to determine the correspondence based on the second information.

In this embodiment of the present application, the second device may execute actions performed by the core network device (including the control-plane core network device or the user-plane core network device) in the first wireless communications system in the foregoing method embodiments. When the first device is a wireless access device of the first wireless communications system, the first device may execute actions of the wireless access device in the first wireless communications system in the foregoing method embodiments. To implement this embodiment of the present application, a wireless access device 1300 in the first wireless communications system may include a transceiver 1302 and a processor 1301. The transceiver 1302 is configured to execute transceiver actions of the wireless access device in the first wireless communications system in the foregoing method embodiments, and the processor 1301 is configured to execute processing actions such as an obtaining action, a determining action, and the like of the wireless access device in the first wireless communications system in the foregoing method embodiments. Similarly, a core network device 1400 in the first wireless communications system may include a transceiver 1402 and a processor 1401. The transceiver 1402 is configured to execute transceiver actions of the core network device in the first wireless communications system in the foregoing method embodiments, and the processor 1401 is configured to execute processing actions such as an obtaining action, a determining action, and the like of the core network device in the first wireless communications system in the foregoing method embodiments.

Another aspect of an embodiment of the present application provides a wireless communications system, used as a second wireless communications system to exchange information with a first wireless communications system. The first wireless communications system and the second wireless communications system use different communications technologies. The second wireless communications system 1200 includes a first device 1201 and a second device 1202. The first device 1201 is configured to determine that a service data flow of user equipment is to be transferred from the first wireless communications system to the second wireless communications system.

The second device 1202 is configured to determine one service bearer that is on a non-access stratum in the second wireless communications system and that is corresponding to one service bearer group of the service data flow on a non-access stratum in the first wireless communications system, where the service bearer group includes at least two service bearers on the non-access stratum in the first wireless communications system.

The second device 1202 is further configured to notify the first wireless communications system of the service bearer.

Optionally, the second device 1202 is further configured to receive third information from the first wireless communications system. The third information indicates at least one service bearer group of the service data flow on the non-access stratum in the first wireless communications system, and at least one of a traffic flow template and a traffic flow template priority. Each of the at least one service bearer group is corresponding to one service bearer on an access stratum in the first wireless communications system, and the at least one service bearer group includes the one service bearer group. The second device is further configured to determine, according to the third information, the service bearer that is on the non-access stratum in the second wireless communications system and that is corresponding to the service bearer group of the service data flow on the non-access stratum in the first wireless communications system.

In this embodiment of the present application, the second device 1202 may execute actions performed by the core network device (including the control-plane core network device or the user-plane core network device) in the second wireless communications system in the foregoing method embodiments. When the first device is a wireless access device of the second wireless communications system, the first device may execute actions of the wireless access device in the second wireless communications system in the foregoing method embodiments. To implement this embodiment of the present application, a wireless access device 1300 in the second wireless communications system may include a transceiver 1302 and a processor 1301. The transceiver 1302 is configured to execute transceiver actions of the wireless access device in the second wireless communications system in the foregoing method embodiments, and the processor 1301 is configured to execute processing actions such as an obtaining action, a determining action, and the like of the wireless access device in the second wireless communications system in the foregoing method embodiments.

Another aspect of an embodiment of the present application provides a wireless communications system. The wireless communications system is used as a first wireless communications system to exchange information with a second wireless communications system. The first wireless communications system and the second wireless communications system use different communications technologies. The first wireless communications system 1100 includes a first device 1101 and a second device 1102.

The first device 1101 is configured to determine that a service data flow of user equipment is to be transferred from the second wireless communications system to the first wireless communications system. The first wireless communications system and the second wireless communications system use different communications technologies. The second device 1102 is configured to receive fourth information from the second wireless communications system. The fourth information indicates a service bearer of the service data flow on a non-access stratum in the second wireless communications system. The second device is configured to determine, according to the fourth information, one service bearer group that is on a non-access stratum in the first wireless communications system and that is corresponding to the service bearer. The service bearer group includes at least two service bearers on the non-access stratum in the first wireless communications system.

Optionally, the first device 1101 is specifically configured to split, by a core network device in the first wireless communications system according to the fourth information, a traffic flow template, and a traffic flow template priority, the service bearer to determine the service bearer group that is on the non-access stratum in the first wireless communications system and that is corresponding to the service bearer.

In this embodiment of the present application, the second device 1102 may execute actions performed by the core network device (including the control-plane core network device or the user-plane core network device) in the first wireless communications system in the foregoing method embodiments. When the first device is a wireless access device in the first wireless communications system, the first device may execute actions of the wireless access device in the first wireless communications system in the foregoing method embodiments. To implement this embodiment of the present application, the wireless access device in the first wireless communications system may include a transceiver and a processor. The transceiver is configured to execute transceiver actions of the wireless access device in the first wireless communications system in the foregoing method embodiments, and the processor is configured to execute processing actions such as an obtaining action, a determining action, and the like of the wireless access device in the first wireless communications system in the foregoing method embodiments. It should be noted that, to implement the technical solutions in the foregoing method embodiments, a transceiver 1302 and a processor 1301 included in a wireless access device 1300 of each wireless communications system may be connected by using a physical bus. Similarly, to implement the technical solutions in the foregoing method embodiments, a transceiver 1402 and a processor 1401 included in a core network device 1400 of each wireless communications system may be connected by using a physical bus.

One aspect of an embodiment of the present application provides user equipment 1500, applied to a scenario in which a service data flow of the user equipment is transferred from a first wireless communications system to a second wireless communications system. The user equipment includes a receiving unit 1502 and a processing unit 1501.

The receiving unit 1502 is configured to receive a first notification sent by the first wireless communications system, where the first notification is used to indicate one service bearer that is on a non-access stratum in the second wireless communications system and that is corresponding to one service bearer group of the service data flow of the user equipment on a non-access stratum in the first wireless communications system, and the service bearer group includes at least two service bearers on the non-access stratum in the first wireless communications system.

The processing unit 1501 is configured to transfer, according to the first notification, the service data flow from the service bearer group on the non-access stratum in the first wireless communications system to the service bearer on the non-access stratum in the second wireless communications system.

Another aspect of an embodiment of the present application provides user equipment 1500, applied to a scenario in which a service data flow of the user equipment is transferred from a first wireless communications system to a second wireless communications system. The user equipment includes a receiving unit 1502 and a processing unit 1501.

The receiving unit 1502 is configured to receive a third notification sent by the second wireless communications system, where the third notification is used to indicate one service bearer that is on a non-access stratum in the second wireless communications system and that is corresponding to one service bearer group of the service data flow of the user equipment on a non-access stratum in the first wireless communications system, and the service bearer group includes at least two service bearers on the non-access stratum in the first wireless communications system. The processing unit 1501 is configured to transfer, according to the third notification, the service data flow from the service bearer group on the non-access stratum in the first wireless communications system to the service bearer on the non-access stratum in the second wireless communications system.

It should be noted that the receiving unit 1502 of the user equipment 1500 provided in various aspects of the embodiments of the present application may be physically implemented as a receiver, the processing unit 1501 may be physically implemented as a processor, and the receiver and the processor may be connected by using a physical bus. To implement the technical solutions in the method embodiments, the user equipment may further include a transmitter and another electronic circuit.

Using the wireless communications system and the user equipment provided in the embodiments of the present application may avoid a problem that a service data flow is not continuous because the second wireless communications system randomly allocates a service bearer, thereby improving experience of the user equipment.

Another aspect of an embodiment of the present application provides a radio resource control (RRC) configuration update method for reflective quality of service (Reflective QoS), including the following content:
The reflective QoS means that a service has an uplink and downlink symmetry feature, that is, uplink QoS and downlink QoS are the same, and uplink and downlink TFT filter templates are also symmetric. For example, an uplink source address and source port number are a downlink destination address and destination port number. An uplink destination address and destination port number are a downlink source address and source port number. A DRB (data radio bearer, data radio bearer) on an air interface side is uplink and downlink symmetric, that is, an uplink and a downlink provide a same QoS service. Therefore, a downlink service flow QoS flow with a reflective QoS feature and a corresponding uplink service flow QoS flow are mapped to a same DRB.

In a manner of reducing control signaling, a network side does not notify a terminal of an uplink QoS rule through signaling, but implicitly notifies the terminal of the rule by using a downlink data packet. That is, the terminal receives a downlink data packet of a flow1 from a DRB1, forwards a 5-tuple of the downlink data packet header to obtain an uplink TFT, and maps a data packet of the uplink flow1 to the DRB1, where an index value of a QoS parameter corresponding to the TFT is the flow1. Therefore, in this manner, signaling used by a core network to notify the terminal of the QoS rule is reduced, and air interface signaling used by a wireless access device to notify the terminal of a mapping relationship from a flow to a DRB is reduced.

Another technical solution for updating the mapping relationship from a flow to a DRB is as follows:
Scenario 1:
   A wireless access device sends a downlink data packet of a flow1 over a DRB 1, and notifies UE that the flow1 has a reflective QoS feature, or notifies the UE that a data packet of the flow1 has a reflective QoS feature, for example, the indication information is carried in a packet header of the data packet.
   2. The user equipment receives the data packet of the flow1 in the DRB1, forwards a 5-tuple of the downlink data packet header to obtain an uplink TFT, and maps a data packet of the uplink flow1 to the DRB1, where an index value of QoS corresponding to the TFT is the flow1. In this manner, the user equipment may obtain a mapping relationship from an uplink QoS flow to a DRB, namely, from the flow1 to the DRB1, and stores the mapping relationship.
   3. The wireless access device modifies the mapping relationship from a QoS flow to a DRB, for example, the flow1 needs to be mapped to a DRB2 according to a radio resource management (radio resource management, RRM) algorithm. Therefore, the wireless access device notifies a terminal of the mapping relationship from the QoS flow1 to the DRB2 by using RRC signaling.
   4. When receiving the mapping relationship from the QoS flow1 to the DRB2 that is sent by the wireless access device, the terminal changes the locally stored mapping from the QoS flow1 to the DRB, and updates the mapping to a mapping from the QoS flow1 to the DRB2. The terminal sends the data packet of the QoS flow1 over the DRB2.
Scenario 2:
   A wireless access device configures a mapping relationship from a QoS flow to a DRB, for example, maps a QoS flow1 to a DRB2 according to an RRM algorithm. Therefore, the wireless access device notifies a terminal of the mapping relationship from the QoS flow1 to the DRB2 by using RRC signaling. The terminal receives the RRC signaling to obtain the mapping relationship from the QoS flow1 to the DRB2, namely, from an uplink flow to a DRB, and stores the mapping relationship. The terminal sends data of the QoS flow1 over the DRB2.

The wireless access device modifies the mapping relationship from a QoS flow to a DRB, for example, determines to map the QoS flow1 to a DRB3 according to the RRM algorithm.

The wireless access device sends a downlink data packet of the QoS flow1 over the DRB3, and notifies the UE that the QoS flow1 has a reflective QoS feature, or notifies the UE that a data packet of the flow1 has a reflective QoS feature, for example, the indication information is carried in a packet header of the data packet. 4. The user equipment receives the data packet of the QoS flow1 in the DRB3 and learns that the data packet has the reflective feature, forwards a 5-tuple of the downlink data packet header to obtain an uplink TFT, and maps the uplink data packet of the QoS flow1 to the DRB3, where an index value of QoS corresponding to the TFT is the flow1. In this way, the user equipment can obtain the mapping relationship from the uplink QoS flow to the DRB, namely, from the QoS flow1 to the DRB3, change the locally stored mapping from the QoS flow1 to the DRB2, and update the mapping to a mapping from the QoS flow1 to the DRB3. The user equipment sends the data packet of the QoS flow1 over the DRB3.

Persons skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, or an optical memory) that include computer usable program code.

This application is described with reference to the flowcharts and/or block diagrams of the method, the apparatus (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams. These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

## Claims

1. An inter-system information exchange method of a data forwarding for a handover of a user equipment from a first wireless communications system (1100) to a second wireless communications system (1200), comprising:
receiving, by a user-plane core network device (1400) in the first wireless communications system (1100) from a wireless access device (1300) in the first wireless communications system (1100), a packet comprising data in a tunnel per a protocol data unit, PDU, session and an identifier of a quality of service, QoS, flow which the data belongs to, wherein the tunnel per the PDU session is a tunnel between the user-plane core network device (1400) and the wireless access device (1300), the first wireless communications system (1100) is a fifth generation, 5G, wireless communications system and the second wireless communications system (1200) is a long term evolution, LTE, wireless communications system;
mapping, by the user-plane core network device (1400), the data in the tunnel per the PDU session to a tunnel for a service bearer in the second wireless communications system (1200) and removing the identifier of the QoS flow;
sending, by the user-plane core network device (1400) to the second wireless communications system (1200), the data mapped to the tunnel for the service bearer;
wherein the mapping, by the user-plane core network device (1400), the data in the tunnel per the PDU session to the tunnel for the service bearer, comprises:
mapping, by the user-plane core network device (1400) according to a mapping relationship between the service bearer and the QoS flow which the data belongs to, the data in the tunnel per the PDU session to the tunnel for the service bearer.

2. The method according to claim 1, wherein the service bearer in the second wireless communications system (1200) is an evolved packet system, EPS, bearer.

3. A user-plane core network device (1400) in a first wireless communications system (1100), applied in a data forwarding for a handover of a user equipment from the first wireless communications system (1100) to a second wireless communications system (1200), comprising:
means for receiving from a wireless access device (1300) in the first wireless communications system (1100), a packet comprising data in a tunnel per a protocol data unit, PDU, session and an identifier of a quality of service, QoS, flow which the data belongs to, wherein the tunnel per the PDU session is a tunnel between the user-plane core network device (1400) and the wireless access device (1300), the first wireless communications system (1100) is a fifth generation, 5G, wireless communications system and the second wireless communications system (1200) is a long term evolution, LTE, wireless communications system;
means for mapping the data in the tunnel per the PDU session to a tunnel for a service bearer in the second wireless communications system (1200) and removing the identifier of the QoS flow;
means for sending to the second wireless communications system (1200), the data mapped to the tunnel for the service bearer;
wherein the mapping the data in the tunnel per the PDU session to the tunnel for the service bearer, comprises:
mapping according to a mapping relationship between the service bearer and the QoS flow which the data belongs to, the data in the tunnel per the PDU session to the tunnel for the service bearer.

4. The device according to claim 3, wherein the service bearer in the second wireless communications system (1200) is an evolved packet system, EPS, bearer.

5. A wireless communitions system, applied in a data forwarding for a handover of a user equipment from the wireless communications system to another wireless communications system, comprising: a user-plane core network device (1400) and a wireless access device (1300); wherein
the user-plane core network device (1400) is configured to:
receive from the wireless access device (1300) in the wireless communications system, a packet comprising data in a tunnel per a protocol data unit, PDU, session and an identifier of a quality of service, QoS, flow which the data belongs to, wherein the tunnel per the PDU session is a tunnel between the user-plane core network device (1400) and the wireless access device (1300), the wireless communications system is a fifth generation, 5G, wireless communications system and the another wireless communications system is a long term evolution, LTE, wireless communications system;
map the data in the tunnel per the PDU session to a tunnel for a service bearer in the another wireless communications system and removing the identifier of the QoS flow;
send to the second wireless communications system (1200), the data mapped to the tunnel for the service bearer;
wherein the configuration of mapping the data in the tunnel per the PDU session to the tunnel for the service bearer, comprises:
mapping according to a mapping relationship between the service bearer and the QoS flow which the data belongs to, the data in the tunnel per the PDU session to the tunnel for the service bearer;
wherein the wireless access device (1300) is configured to:
send to the user-plane core network device (1400), the packet comprising the data in the tunnel per the PDU session and the identifier of the QoS flow which the data belongs to.

6. The system according to claim 5, wherein the service bearer in the second wireless communications system (1200) is an evolved packet system, EPS, bearer.

7. A computer-readable storage medium comprising instructions which when executed by a computer, cause the computer to carry out the method according to claim 1 or 2.

## Patentansprüche

1. Informationsaustauschverfahren zwischen Systemen einer Datenweiterleitung für eine Weiterreichung eines Benutzergeräts von einem ersten drahtlosen Kommunikationssystem (1100) zu einem zweiten drahtlosen Kommunikationssystem (1200), umfassend:
Empfangen eines Pakets, das Daten in einem Tunnel über eine Protokolldateneinheit- bzw. PDU-Sitzung und eine Kennung eines Dienstgüte- bzw. QoS-Flusses, zu dem die Daten gehören, umfasst, durch eine Benutzerebenen-Kernnetzvorrichtung (1400) in dem ersten drahtlosen Kommunikationssystem (1100) von einer drahtlosen Zugangsvorrichtung (1300) in dem ersten drahtlosen Kommunikationssystem (1100),
wobei der Tunnel über die PDU-Sitzung ein Tunnel zwischen der Benutzerebenen-Kernnetzvorrichtung (1400) und der drahtlosen Zugangsvorrichtung (1300) ist, das erste drahtlose Kommunikationssystem (1100) ein drahtloses Kommunikationssystem der fünften Generation 5G ist und das zweite drahtlose Kommunikationssystem (1200) ein drahtloses "Long Term Evolution"- bzw. LTE-Kommunikationssystem ist;
Abbilden der Daten in dem Tunnel über die PDU-Sitzung auf einen Tunnel für einen Dienstträger in dem zweiten drahtlosen Kommunikationssystem (1200) durch die Benutzerebene-Kernnetzvorrichtung (1400) und Entfernen der Kennung des QoS-Flusses;
Senden der auf den Tunnel für den Dienstträger abgebildeten Daten zu dem zweiten drahtlosen Kommunikationssystem (1200) durch die Benutzerebenen-Kernnetzvorrichtung (1400);
wobei das Abbilden der Daten in dem Tunnel über die PDU-Sitzung auf den Tunnel für den Dienstträger durch die Benutzerebenen-Kernnetzvorrichtung (1400) Folgendes umfasst:
Abbilden der Daten in dem Tunnel über die PDU-Sitzung auf den Tunnel für den Dienstträger durch die Benutzerebenen-Kernnetzvorrichtung (1400) gemäß einer Abbildungsbeziehung zwischen dem Dienstträger und dem QoS-Fluss, zu dem die Daten gehören.

2. Verfahren nach Anspruch 1, wobei der Dienstträger in dem zweiten drahtlosen Kommunikationssystem (1200) ein "Evolved Packet System"- bzw. EPS-Träger ist.

3. Benutzerebenen-Kernnetzvorrichtung (1400) in einem ersten drahtlosen Kommunikationssystem (1100), die bei einer Datenweiterleitung für eine Weiterreichung eines Benutzergeräts von dem ersten drahtlosen Kommunikationssystem (1100) zu einem zweiten drahtlosen Kommunikationssystem (1200) angewandt wird, umfassend:
Mittel zum Empfangen eines Pakets, das Daten in einem Tunnel über eine Protokolldateneinheit- bzw. PDU-Sitzung und eine Kennung eines Dienstgüte- bzw. QoS-Flusses, zu dem die Daten gehören, umfasst, in dem ersten drahtlosen Kommunikationssystem (1100) von einer drahtlosen Zugangsvorrichtung (1300), wobei der Tunnel über die PDU-Sitzung ein Tunnel zwischen der Benutzerebenen-Kernnetzvorrichtung (1400) und der drahtlosen Zugangsvorrichtung (1300) ist, das erste drahtlose Kommunikationssystem (1100) ein drahtloses Kommunikationssystem der fünften Generation 5G ist und das zweite drahtlose Kommunikationssystem (1200) ein drahtloses "Long Term Evolution"- bzw. LTE-Kommunikationssystem ist;
Mittel zum Abbilden der Daten in dem Tunnel über die PDU-Sitzung auf einen Tunnel für einen Dienstträger in dem zweiten drahtlosen Kommunikationssystem (1200) und Entfernen der Kennung des QoS-Flusses;
Mittel zum Senden der auf den Tunnel für den Dienstträger abgebildeten Daten zu dem zweiten drahtlosen Kommunikationssystem (1200);
wobei das Abbilden der Daten in dem Tunnel über die PDU-Sitzung auf den Tunnel für den Dienstträger Folgendes umfasst:
Abbilden der Daten in dem Tunnel über die PDU-Sitzung auf den Tunnel für den Dienstträger gemäß einer Abbildungsbeziehung zwischen dem Dienstträger und dem QoS-Fluss, zu dem die Daten gehören.

4. Vorrichtung nach Anspruch 3, wobei der Dienstträger in dem zweiten drahtlosen Kommunikationssystem (1200) ein "Evolved Packet System"- bzw. EPS-Träger ist.

5. Drahtloses Kommunikationssystem, das bei einer Datenweiterleitung für eine Weiterreichung eines Benutzergeräts von dem drahtlosen Kommunikationssystem zu einem anderen drahtlosen Kommunikationssystem angewandt wird, umfassend: eine Benutzerebenen-Kernnetzvorrichtung (1400) und eine drahtlose Zugangsvorrichtung (1300); wobei
die Benutzerebenen-Kernnetzvorrichtung (1400) ausgelegt ist zum:
Empfangen eines Pakets, das Daten in einem Tunnel über eine Protokolldateneinheit- bzw. PDU-Sitzung und eine Kennung eines Dienstgüte- bzw. QoS-Flusses, zu dem die Daten gehören, umfasst, von einer drahtlosen Zugangsvorrichtung (1300) in dem drahtlosen Kommunikationssystem, wobei der Tunnel über die PDU-Sitzung ein Tunnel zwischen der Benutzerebenen-Kernnetzvorrichtung (1400) und der drahtlosen Zugangsvorrichtung (1300) ist, das drahtlose Kommunikationssystem ein drahtloses Kommunikationssystem der fünften Generation 5G ist und das andere drahtlose Kommunikationssystem (1200) ein drahtloses "Long Term Evolution"- bzw. LTE-Kommunikationssystem ist;
Abbilden der Daten in dem Tunnel über die PDU-Sitzung auf einen Tunnel für einen Dienstträger in dem anderen drahtlosen Kommunikationssystem und Entfernen der Kennung des QoS-Flusses;
Senden der auf den Tunnel für den Dienstträger abgebildeten Daten zu dem zweiten drahtlosen Kommunikationssystem (1200);
wobei die Konfiguration des Abbildens der Daten in dem Tunnel über die PDU-Sitzung auf den Tunnel für den Dienstträger Folgendes umfasst:
Abbilden der Daten in dem Tunnel über die PDU-Sitzung auf den Tunnel für den Dienstträger gemäß einer Abbildungsbeziehung zwischen dem Dienstträger und dem QoS-Fluss, zu dem die Daten gehören;
wobei die drahtlose Zugangsvorrichtung (1300) ausgelegt ist zum Senden des Pakets, das die Daten in dem Tunnel über die PDU-Sitzung und die Kennung des QoS-Flusses, zu dem die Daten gehören, umfasst, zu der Benutzerebenen-Kernnetzvorrichtung (1400).

6. System nach Anspruch 5, wobei der Dienstträger in dem zweiten drahtlosen Kommunikationssystem (1200) ein "Evolved Packet System"- bzw. EPS-Träger ist.

7. Computerlesbares Speicherungsmedium mit Anweisungen, die, wenn sie durch einen Computer ausgeführt werden, bewirken, dass der Computer das Verfahren nach Anspruch 1 oder 2 ausführt.

## Revendications

1. Procédé d'échange d'informations inter-système d'une transmission de données pour un transfert d'un équipement utilisateur à partir d'un premier système de communications sans fil (1100) à un second système de communications sans fil (1200), comprenant :
la réception, par un dispositif de réseau central de plan utilisateur (1400) dans le premier système de communication sans fil (1100), à partir d'un dispositif d'accès sans fil (1300) dans le premier système de communication sans fil (1100), d'un paquet comprenant des données dans un tunnel par une session d'unité de données de protocole, PDU, et d'un identifiant d'un flux de qualité de service, QoS, auquel les données appartiennent, le tunnel par la session PDU étant un tunnel entre le dispositif de réseau central de plan utilisateur (1400) et le dispositif d'accès sans fil (1300), le premier système de communication sans fil (1100) étant un système de communication sans fil de cinquième génération, 5G, et le second système de communication sans fil (1200) étant un système de communication sans fil d'évolution à long terme, LTE ;
la mise en correspondance, par le dispositif de réseau central de plan utilisateur (1400), des données dans le tunnel par la session PDU avec un tunnel pour une porteuse de service dans le second système de communications sans fil (1200) et la suppression de l'identifiant du flux de QoS ;
l'envoi, par le dispositif de réseau central de plan utilisateur (1400) au deuxième système de communication sans fil (1200), des données mises en correspondance avec le tunnel pour la porteuse de service,
la mise en correspondance, par le dispositif de réseau central de plan utilisateur (1400), des données dans le tunnel par la session PDU avec le tunnel pour la porteuse de service, comprenant :
la mise en correspondance, par le dispositif de réseau central de plan utilisateur (1400) selon une relation de mise en correspondance entre la porteuse de service et le flux de QoS auquel les données appartiennent, des données dans le tunnel par la session PDU avec le tunnel pour la porteuse de service.

2. Procédé selon la revendication 1, la porteuse de service dans le second système de communication sans fil (1200) étant une porteuse de système de paquet évolué, EPS.

3. Dispositif de réseau central de plan utilisateur (1400) dans un premier système de communication sans fil (1100), appliqué dans une transmission de données pour un transfert d'un équipement utilisateur à partir du premier système de communication sans fil (1100) à un second système de communication sans fil (1200), comprenant :
un moyen pour recevoir à partir d'un dispositif d'accès sans fil (1300) dans le premier système de communication sans fil (1100), un paquet comprenant des données dans un tunnel par une session d'unité de données de protocole, PDU, et un identifiant d'un flux de qualité de service, QoS, auquel les données appartiennent, le tunnel par la session PDU étant un tunnel entre le dispositif de réseau central de plan utilisateur (1400) et le dispositif d'accès sans fil (1300), le premier système de communication sans fil (1100) étant un système de communication sans fil de cinquième génération, 5G, et le second système de communication sans fil (1200) étant un système de communication sans fil d'évolution à long terme, LTE ;
un moyen pour mettre en correspondance les données dans le tunnel par la session PDU avec un tunnel pour une porteuse de service dans le deuxième système de communications sans fil (1200) et pour supprimer l'identifiant du flux de QoS ;
un moyen pour envoyer au deuxième système de communication sans fil (1200) les données mises en correspondance avec le tunnel pour la porteuse de service ;
la mise en correspondance des données dans le tunnel par la session PDU avec le tunnel pour la porteuse de service, comprenant :
la mise en correspondance selon une relation de mise en correspondance entre la porteuse de service et le flux de QoS auquel les données appartiennent, des données dans le tunnel par la session PDU avec le tunnel pour la porteuse de service.

4. Dispositif selon la revendication 3, la porteuse de service dans le second système de communication sans fil (1200) étant une porteuse de système de paquet évolué, EPS.

5. Système de communication sans fil, appliqué dans une transmission de données pour un transfert d'un équipement utilisateur à partir du système de communication sans fil à un autre système de communication sans fil, comprenant :
un dispositif de réseau central de plan utilisateur (1400) et un dispositif d'accès sans fil (1300) ;
le dispositif de réseau central de plan utilisateur (1400) étant configuré pour :
recevoir à partir du dispositif d'accès sans fil (1300) dans le système de communications sans fil, un paquet comprenant des données dans un tunnel par une session d'unité de données de protocole, PDU, et un identifiant d'un flux de qualité de service, QoS, auquel les données appartiennent, le tunnel par la session PDU étant un tunnel entre le dispositif de réseau central de plan utilisateur (1400) et le dispositif d'accès sans fil (1300), le système de communications sans fil étant un système de communications sans fil de cinquième génération, 5G, et l'autre système de communications sans fil étant un système de communications sans fil d'évolution à long terme, LTE ;
mettre en correspondance les données dans le tunnel par la session PDU avec un tunnel pour une porteuse de service dans l'autre système de communications sans fil et supprimer l'identifiant du flux de QoS ;
envoyer au deuxième système de communication sans fil (1200), les données mises en correspondance avec le tunnel pour la porteuse de service ;
la configuration de la mise en correspondance des données dans le tunnel par la session PDU avec le tunnel pour la porteuse de service, comprenant :
la mise en correspondance selon une relation de mise en correspondance entre la porteuse de service et le flux de QoS auquel les données appartiennent, des données dans le tunnel par la session PDU avec le tunnel pour la porteuse de service ;
le dispositif d'accès sans fil (1300) étant configuré pour :
envoyer au dispositif de réseau central de plan utilisateur (1400), le paquet comprenant les données dans le tunnel par la session PDU et l'identifiant du flux de QoS auquel les données appartiennent.

6. Système selon la revendication 5, la porteuse de service dans le second système de communication sans fil (1200) étant une porteuse de système de paquet évolué, EPS.

7. Support de stockage lisible par ordinateur comprenant des instructions qui, lorsqu'elles sont exécutées par un ordinateur, amènent l'ordinateur à mettre en oeuvre le procédé selon la revendication 1 ou 2.
